# EUROPEAN PATENT SPECIFICATION

(11) **EP 4 026 730 B1**
(45) Date of publication and mention of the grant of the patent: **01.11.2023**
(21) Application number: 21215376.1
(22) Date of filing: 17.12.2021
(51) Int. Cl.: B60N 2/00, B60N 2/005, B60N 2/02, B60N 2/01, B60N 2/06, B60N 2/22

(54) **VEHICLE SEAT CONTROL DEVICE**
FAHRZEUGSITZSTEUERUNGSVORRICHTUNG
DISPOSITIF DE COMMANDE DE SIÈGE DE VÉHICULE

(30) Priority: 12.01.2021 JP 2021003126
(43) Date of publication of application: 13.07.2022
(73) Proprietor: TOYOTA JIDOSHA KABUSHIKI KAISHA, Toyota-shi, Aichi-ken, 471-8571 (JP)
(72) Inventor: OHNO, Mitsuyoshi, Toyota-shi, Aichi-ken, 471-8571 (JP); TOMITA, Hiroyuki, Kariya-shi, Aichi-ken 448-8651 (JP)
(74) Representative: Cabinet Beau de Loménie

(56) References cited:
- EP-A1- 3 406 480
- US-A1- 2020 171 979

## Description

### BACKGROUND

### Technical Field

The present invention relates to a vehicle seat control device.

### Related Art

For example, Japanese Patent Application Laid-Open (JP-A) No. 2018-079818 discloses technology in which a vehicle seat is provided so as to be capable of rotating about a shaft running along a vehicle vertical direction. In this related art, a seatback is stood upright by electrical control when the vehicle seat is to be rotated such that the rotating vehicle seat does not interfere with other peripheral components.

However, the technology disclosed in JP-A No. 2018-079818 does not consider interference between the moving vehicle seat (referred to hereafter simply as the "moving seat") and an occupant seated in another seat, and so there is further room for improvement in this respect. Document US 2020/171979 is also known and describes a seat assembly determining whether there is interference between a seat or another object and a proposed movement path.

### SUMMARY

The present invention obtains a vehicle seat control device capable of preventing or suppressing interference between a moving seat and an occupant seated in another seat when the moving seat moves.

A vehicle seat control device according to a first aspect includes a first seat arrangement information acquisition section configured to acquire position information of a first seat arrangement representing current seat positions of plural seats that are configured to be capable of moving in a cabin interior, a second seat arrangement information acquisition section configured to acquire position information of a second seat arrangement representing post-movement seat positions of the plural seats, a path identification section configured to identify a movement path of a moving seat of the plural seats when moving from the first seat arrangement acquired by the first seat arrangement information acquisition section to the second seat arrangement acquired by the second seat arrangement information acquisition section, an occupant detection section configured to detect occupants sitting on the plural seats, and a seat operation section configured to operate the moving seat so as to move the moving seat along the movement path identified by the path identification section. In a case in which an occupant sitting on another seat disposed peripherally to the movement path of the moving seat has been detected by the occupant detection section, the seat operation section is controlled so as to execute any one action of the group consisting of reducing a movement speed of the moving seat, canceling movement of the moving seat, and shortening a movement distance of the moving seat.

The vehicle seat control device according to the first aspect includes the first seat arrangement information acquisition section, the second seat arrangement information acquisition section, the path identification section, the occupant detection section, and the seat operation section. The first seat arrangement information acquisition section acquires position information of the first seat arrangement representing the current seat positions of the plural seats that are configured to be capable of moving in the cabin interior. The second seat arrangement information acquisition section acquires position information of the second seat arrangement representing the post-movement seat positions of the plural seats. The path identification section identifies the movement path of the moving seat when moving from the first seat arrangement acquired by the first seat arrangement information acquisition section to the second seat arrangement acquired by the second seat arrangement information acquisition section. The occupant detection section detects for occupants sitting on the plural seats. The seat operation section operates the moving seat so as to move along the movement path.

In the present aspect, in a case in which an occupant sitting on the other seat disposed peripherally to the movement path of the moving seat has been detected by the occupant detection section, the vehicle seat control device controls the seat operation section so as to execute any one action of reducing the movement speed of the moving seat, canceling movement of the moving seat, or shortening the movement distance of the moving seat.

Note that although the moving seat moves from the first seat arrangement to the second seat arrangement in a case in which the movement speed of the moving seat is reduced, the moving seat does not move from the first seat arrangement in a case in which movement of the moving seat is canceled. Moreover, movement of the moving seat is stopped between the first seat arrangement and the second seat arrangement in a case in which the movement distance of the moving seat is shortened.

Thus, in the present aspect, interference between the moving seat and the occupant sitting on the other seat is prevented in a case in which movement of the moving seat is canceled. On the other hand, when the moving seat is moved, such as when the movement speed of the moving seat is reduced or when the movement distance of the moving seat is shortened, the occupant sitting on the other seat is able to withdraw their legs or the like, thereby enabling interference between the moving seat and the occupant sitting on the other seat to be suppressed.

Note that in the present disclosure, "detect occupants" may for example include detecting the build of the occupant as well as the location of the legs of the occupant in addition to detecting for the presence of an occupant. Moreover, in the present disclosure, operation of the moving seat by the "seat operation section" may include an operation to pivot the moving seat about a shaft running along a seat width direction to change a reclining angle of the moving seat or an operation to rotate the moving seat about a shaft running along a vehicle vertical direction, in addition to an operation to slide the moving seat along a vehicle front-rear direction.

A vehicle seat control device according to a second aspect is the vehicle seat control device according to the first aspect, wherein in a case in which an occupant sitting on another seat disposed peripherally to the movement path of the moving seat has been detected by the occupant detection section, the seat operation section is controlled so as to reduce a movement speed of the moving seat in comparison to cases in which there is no detection of any occupant sitting on the other seat.

In the vehicle seat control device according to the second aspect, the movement speed of the moving seat is reduced in a case in which an occupant is sitting on the other seat disposed peripherally to the movement path of the moving seat. This enables the moving seat to be moved from the first seat arrangement to the second seat arrangement, and enables the occupant sitting on the other seat to withdraw their legs or the like as the moving seat is moved.

A vehicle seat control device according to a third aspect is the vehicle seat control device according to the second aspect, further including a movement distance computation section configured to compute a movement distance of the moving seat. The seat operation section is controlled so as to cancel movement of the moving seat in a case in which a distance between the moving seat at the first seat arrangement and an occupant sitting on another seat is smaller than the movement distance of the moving seat when moving from the first seat arrangement to the second seat arrangement.

The vehicle seat control device according to the third aspect further includes the movement distance computation section that computes the movement distance of the moving seat. In a case in which the distance between the moving seat at the first seat arrangement and an occupant sitting on another seat is smaller than the movement distance of the moving seat when moving from the first seat arrangement to the second seat arrangement, the movement of the moving seat is canceled.

For example, in a case in which the distance between the moving seat at the first seat arrangement and an occupant sitting on another seat is smaller than the movement distance of the moving seat when moving from the first seat arrangement to the second seat arrangement, the moving seat would interfere with the occupant sitting on another seat if the moving seat were moved from the first seat arrangement to the second seat arrangement. Movement of the moving seat is therefore canceled in such cases.

A vehicle seat control device according to the invention further including a warning generation section configured to issue a warning. The warning generation section is controlled so as to issue the warning coordinated with movement of the moving seat in a case in which an occupant sitting on another seat disposed peripherally to the movement path of the moving seat has been detected by the occupant detection section.

The vehicle seat control device according to the fourth aspect further includes the warning generation section that issues the warning. The warning is issued by the warning generation section coordinated with the movement of the moving seat in a case in which an occupant is sitting on the other seat disposed peripherally to the movement path of the moving seat. This enables occupants in the surroundings to be encouraged to pay attention when the moving seat is to be moved along the movement path, thus enabling interference between the moving seat and occupants to be suppressed.

Note that the "warning" is performed in order to encourage occupants in the surroundings to pay attention. Thus, "coordinated with movement of the moving seat" may refer to prior to the moving seat moving, while the moving seat is moving, or a combination thereof.

A vehicle seat control device according to a fifth aspect is the vehicle seat control device according to the fourth aspect, wherein the warning generation section is controlled so as to issue the warning to an occupant sitting on another seat in a case in which the occupant sitting on the other seat disposed peripherally to the movement path of the moving seat has been detected by the occupant detection section.

In the vehicle seat control device according to the fifth aspect, the warning is issued to the occupant sitting on the other seat disposed peripherally to the movement path of the moving seat, thereby enabling this particular occupant to be encouraged to pay attention. In other words, the warning is not issued to occupants sitting on seats other than this other seat that is disposed peripherally to the movement path of the moving seat.

A vehicle seat control device according to a sixth aspect is the vehicle seat control device according to any one of the first aspect to the fifth aspect, wherein the seat operation section is controlled so as to stop the moving seat in a case in which the moving seat has interfered with another occupant or another seat.

In the vehicle seat control device according to the sixth aspect, the moving seat is stopped in unexpected situations, such as cases in which an occupant makes a sudden movement resulting in the moving seat interfering with the occupant or another seat.

A vehicle seat control device according to a seventh aspect includes: a first seat arrangement information acquisition section configured to acquire position information of a first seat arrangement representing current seat positions of plural seats that are configured to be capable of moving in a cabin interior; a second seat arrangement information acquisition section configured to acquire position information of a second seat arrangement representing post-movement seat positions of the plural seats; a path identification section configured to identify a movement path of a moving seat of the plural seats when moving from the first seat arrangement acquired by the first seat arrangement information acquisition section to the second seat arrangement acquired by the second seat arrangement information acquisition section; an occupant detection section configured to detect occupants sitting on the plural seats; and a seat operation section configured to operate the moving seat so as to move the moving seat along the movement path identified by the path identification section. In a case in which an occupant sitting on another seat disposed peripherally to the movement path of the moving seat has been detected by the occupant detection section, the seat operation section is controlled so as to move the other seat in a direction away from the moving seat before moving the moving seat along the movement path to the second seat arrangement.

The vehicle seat control device according to the seventh aspect includes the first seat arrangement information acquisition section, the second seat arrangement information acquisition section, the path identification section, the occupant detection section, and the seat operation section. The first seat arrangement information acquisition section acquires position information of the first seat arrangement representing the current seat positions of the plural seats that are configured to be capable of moving in the cabin interior. The second seat arrangement information acquisition section acquires position information of the second seat arrangement representing the post-movement seat positions of the plural seats. The path identification section identifies the movement path of the moving seat when moving from the first seat arrangement acquired by the first seat arrangement information acquisition section to the second seat arrangement acquired by the second seat arrangement information acquisition section. The occupant detection section detects for occupants sitting on the plural seats. The seat operation section operates the moving seat so as to move along the movement path.

In the present aspect, in a case in which an occupant sitting on the other seat disposed peripherally to the movement path of the moving seat has been detected by the occupant detection section, the vehicle seat control device moves the other seat in a direction away from the moving seat before moving the moving seat along the movement path to the second seat arrangement.

Namely, in the present aspect, in a case in which an occupant is sitting on the other seat disposed peripherally to the movement path of the moving seat, this other seat is moved in a direction away from the moving seat (more specifically, away from the second seat arrangement), thereby enabling a separation distance between the moving seat and the other seat to be increased. After the separation distance between the moving seat and the other seat has been increased, the moving seat is then moved along the movement path to the second seat arrangement.

In the present aspect, since the moving seat is moved toward the other seat after the other seat has first been moved away from the moving seat, interference between the moving seat and the occupant sitting on the other seat can be prevented or suppressed.

The vehicle seat control device according to the first aspect has an excellent advantageous effect of enabling interference between the moving seat and the occupant sitting on the other seat when the moving seat is moving to be prevented or suppressed.

The vehicle seat control device according to the second aspect has an excellent advantageous effect of enabling interference between the moving seat and the occupant sitting on the other seat to be suppressed by moving the moving seat at a slower speed.

The vehicle seat control device according to the third aspect has an excellent advantageous effect of enabling interference between the moving seat and the occupant sitting on the other seat to be avoided by not allowing the moving seat to move.

The vehicle seat control device according to the fourth aspect has an excellent advantageous effect of enabling interference with the moving seat to be avoided by issuing a warning when the moving seat moves such that the occupant withdraws their legs or the like.

The vehicle seat control device according to the fifth aspect has an excellent advantageous effect of enabling disturbance felt toward the warning by occupants other than the occupant seated in the other seat disposed peripherally to the movement path of the moving seat to be alleviated.

The vehicle seat control device according to the sixth aspect has an excellent advantageous effect of enabling unexpected situations to be dealt with by stopping the moving seat for example in a case in which an occupant moves suddenly such that the occupant interferes with the moving seat.

The vehicle seat control device according to the seventh aspect has an excellent advantageous effect of enabling interference between the moving seat and the occupant sitting on the other seat when the moving seat is moving to be prevented or suppressed.

### BRIEF DESCRIPTION OF THE DRAWINGS

Exemplary embodiments of the present invention will be described in detail based on the following figures, wherein:
Fig. 1 is a block diagram illustrating a hardware configuration of a vehicle seat control device according to a first exemplary embodiment;
Fig. 2 is a block diagram illustrating a functional configuration of a vehicle seat control device according to the first exemplary embodiment;
Fig. 3 is a side view illustrating a driving orientation of a vehicle seat on a driver's seat side;
Fig. 4 is a side view illustrating an activity orientation of a vehicle seat on a driver's seat side;
Fig. 5 is a side view illustrating a resting orientation of a vehicle seat on a driver's seat side;
Fig. 6 is a side view illustrating an activity orientation of a vehicle seat other than a driver's seat;
Fig. 7 is a side view illustrating a resting orientation of a vehicle seat other than a driver's seat;
Fig. 8A is a plan view illustrating a layout of vehicle seats in a first cabin interior mode;
Fig. 8B is a plan view illustrating a layout of vehicle seats in a second cabin interior mode;
Fig. 8C is a plan view illustrating a layout of vehicle seats in a third cabin interior mode;
Fig. 9 is a flowchart illustrating vehicle seat transition process performed by a vehicle seat control device according to the first exemplary embodiment;
Fig. 10A is an operation diagram illustrating vehicle seat transition process performed by a vehicle seat control device according to the first exemplary embodiment;
Fig. 10B is an operation diagram illustrating vehicle seat transition process performed by a vehicle seat control device according to the first exemplary embodiment;
Fig. 11A is an operation diagram illustrating vehicle seat transition process performed by a vehicle seat control device according to a second exemplary embodiment;
Fig. 11B is an operation diagram illustrating vehicle seat transition process performed by a vehicle seat control device according to the second exemplary embodiment;
Fig. 11C is an operation diagram illustrating vehicle seat transition process performed by a vehicle seat control device according to the second exemplary embodiment;
Fig. 12 is a flowchart illustrating vehicle seat transition process performed by a vehicle seat control device according to the second exemplary embodiment;
Fig. 13A is an operation diagram illustrating vehicle seat transition process performed by a vehicle seat control device according to the second exemplary embodiment;
Fig. 13B is an operation diagram illustrating vehicle seat transition process performed by a vehicle seat control device according to the second exemplary embodiment;
Fig. 13C is an operation diagram illustrating vehicle seat transition process performed by a vehicle seat control device according to the second exemplary embodiment;
Fig. 13D is an operation diagram illustrating vehicle seat transition process performed by a vehicle seat control device according to the second exemplary embodiment;
Fig. 13E is an operation diagram illustrating vehicle seat transition process performed by a vehicle seat control device according to the second exemplary embodiment;
Fig. 14 is a flowchart illustrating vehicle seat transition process performed by a vehicle seat control device according to the second exemplary embodiment;
Fig. 15A is an operation diagram corresponding to Fig. 11A, illustrating vehicle seat transition process in a comparative example;
Fig. 15B is an operation diagram corresponding to Fig. 11C, illustrating vehicle seat transition process in a comparative example;
Fig. 16A is an operation diagram corresponding to Fig. 13A, illustrating vehicle seat transition process in a comparative example; and
Fig. 16B is an operation diagram corresponding to Fig. 13C, illustrating vehicle seat transition process in a comparative example.

### DETAILED DESCRIPTION

Explanation follows regarding a vehicle seat control device according to exemplary embodiments of the present invention, with reference to the drawings. Note that the arrow FR, the arrow UP, and the arrow RH depicted as appropriate in the drawings respectively indicate a forward direction (direction of progress) of a vehicle, an upward direction, and a rightward direction of the vehicle. Moreover, in the following explanation, unless specifically stated otherwise, reference simply to front and rear, left and right, and up and down directions refers to front and rear in a substantially vehicle front-rear direction, left and right in a substantially vehicle left-right direction (vehicle width direction), and up and down in a substantially vehicle vertical direction.

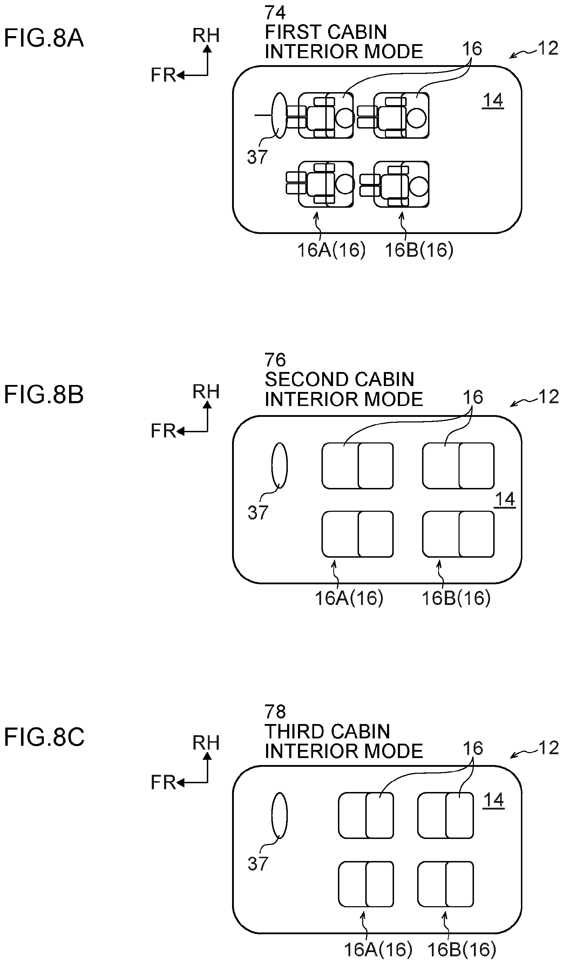

In the present exemplary embodiments, a vehicle 12 such as that illustrated in Fig. 8A is as an example an autonomously driven vehicle that is capable of switching between autonomous driving and manual driving. The vehicle 12 is a one-box design passenger vehicle including plural vehicle seats 16 in a cabin interior 14. Note that although the vehicle seats 16 are laid out in two rows with respect to the vehicle front-rear direction in the examples given, there is no limitation to two rows.

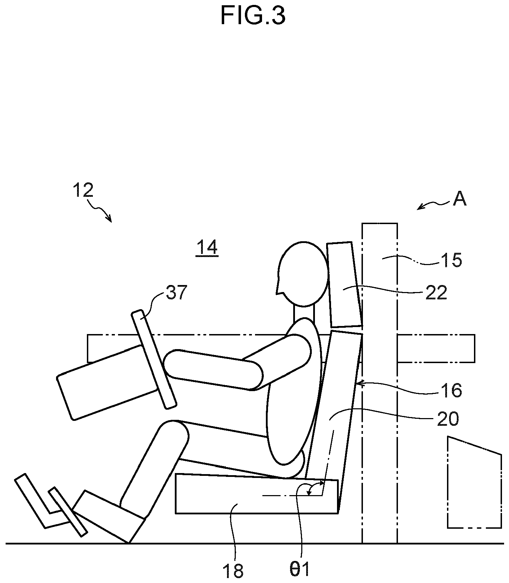

As illustrated in Fig. 3, each of the vehicle seats 16 includes a seat cushion 18 on which an occupant sits, a seatback 20 projecting upright from a rear end portion of the seat cushion 18 so as to support the upper body of the occupant sitting on the seat cushion 18, and a headrest 22 attached to an upper end portion of the seatback 20 so as to support the head of the occupant sitting on the seat cushion 18.

### First Exemplary Embodiment

### Hardware Configuration

Explanation follows regarding a hardware configuration of a vehicle seat control device according to a first exemplary embodiment.

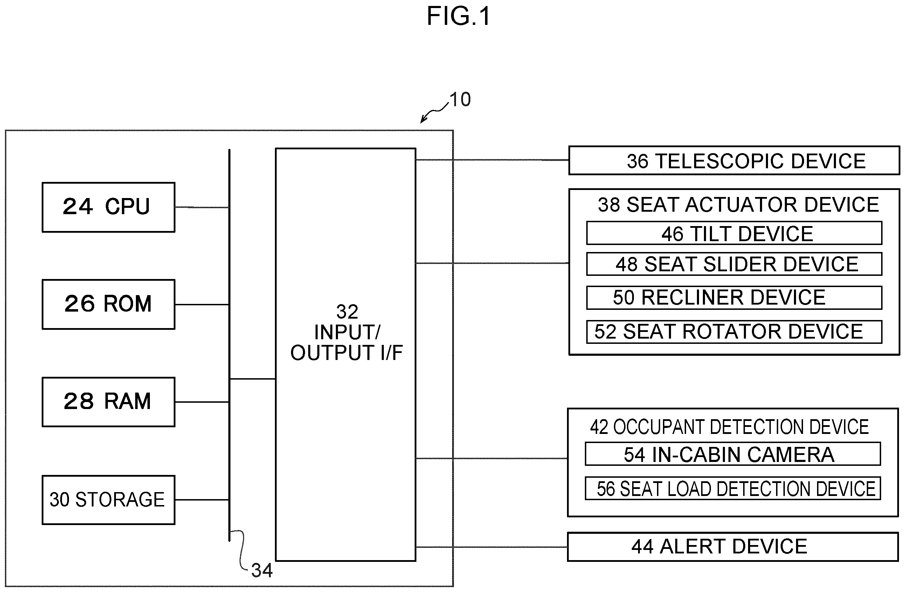

Fig. 1 is a block diagram illustrating a hardware configuration of a vehicle seat control device 10 according to the first exemplary embodiment. As illustrated in Fig. 1, the vehicle seat control device 10 is configured including a central processing unit (CPU) 24, read only memory (ROM) 26, random access memory (RAM) 28, storage 30, and an input/output interface (input/output I/F) 32. These configurations are connected together so as to be capable of communicating with each other through a bus 34.

The CPU 24 is a central processing unit that executes various programs and controls various sections. Namely, the CPU 24 serves as a processor, and reads a program from the ROM 26, serving as memory, or from the storage 30, serving as memory, and executes the program using the RAM 28 as a workspace. The CPU 24 controls the respective configurations and performs various arithmetic process according to the program stored in the ROM 26 or the storage 30.

The ROM 26 holds various programs and various data. The RAM 28 serves as a workspace that temporarily stores programs and data. The storage 30 is configured by a hard disk drive (HDD) or a solid state drive (SSD), and holds various programs, including an operating system, as well as various other data. In the present exemplary embodiment, a program, various data, and so on used to perform process are held in the ROM 26 or the storage 30.

A telescopic device 36, seat actuator devices 38, occupant detection devices 42, an alert device 44, and the like are connected to the input/output I/F 32.

The telescopic device 36 moves a steering wheel 37 (see Fig. 3) along the vehicle front-rear direction.

Each of the seat actuator devices 38 includes a tilt device 46, a seat slider device 48, a recliner device 50, and a seat rotator device 52. The seat actuator device 38 is connected to the corresponding vehicle seat 16. The tilt device 46, the seat slider device 48, the recliner device 50, and the seat rotator device 52 are each configured including a non-illustrated drive motor. The drive motors are controlled based on automatic control by the vehicle seat control device 10. Driving the drive motors corresponding to the tilt device 46, the seat slider device 48, the recliner device 50, and the seat rotator device 52 moves the corresponding vehicle seat 16, and the vehicle seat 16 stops moving when the drive motors are stopped.

The tilt device 46, the seat slider device 48, the recliner device 50, and the seat rotator device 52 of the seat actuator device 38 are connected to respective actuation switches provided to the corresponding vehicle seat 16. This enables the vehicle seat 16 to be moved by manual operation of the actuation switches as well as by automatic control by the vehicle seat control device 10. Note that position information and the like regarding the vehicle seat 16 obtained by the seat actuator device 38 is stored in the ROM 26 or the storage 30.

The tilt device 46 is a device that pivots (moves) the seat cushion 18 with respect to the seatback 20 about a shaft disposed running along the seat width direction at a rear end side of the seat cushion 18.

The seat slider device 48 is a device that slides (moves) the vehicle seat 16 along the vehicle front-rear direction.

The recliner device 50 is a device that pivots the seatback 20 with respect to the seat cushion 18 about a shaft disposed running along the seat width direction at a lower end side of the seatback 20.

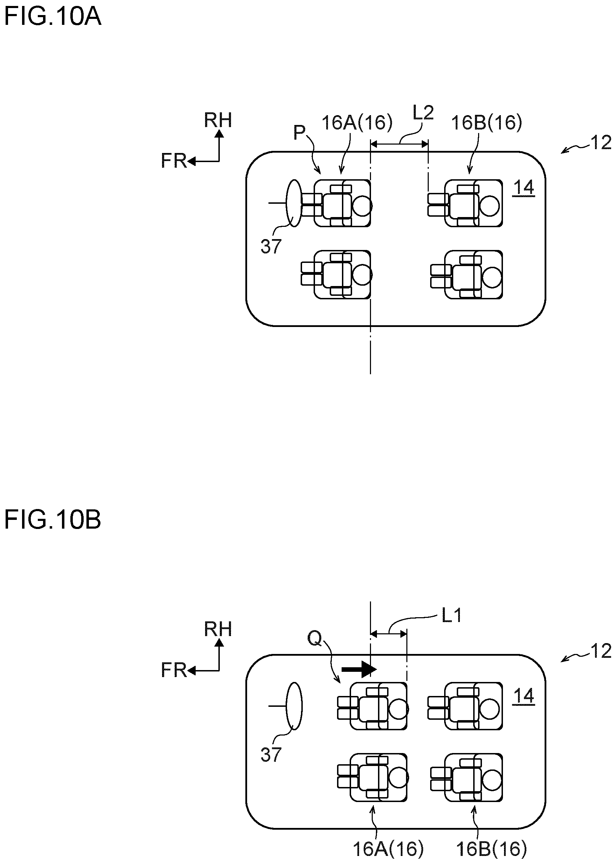

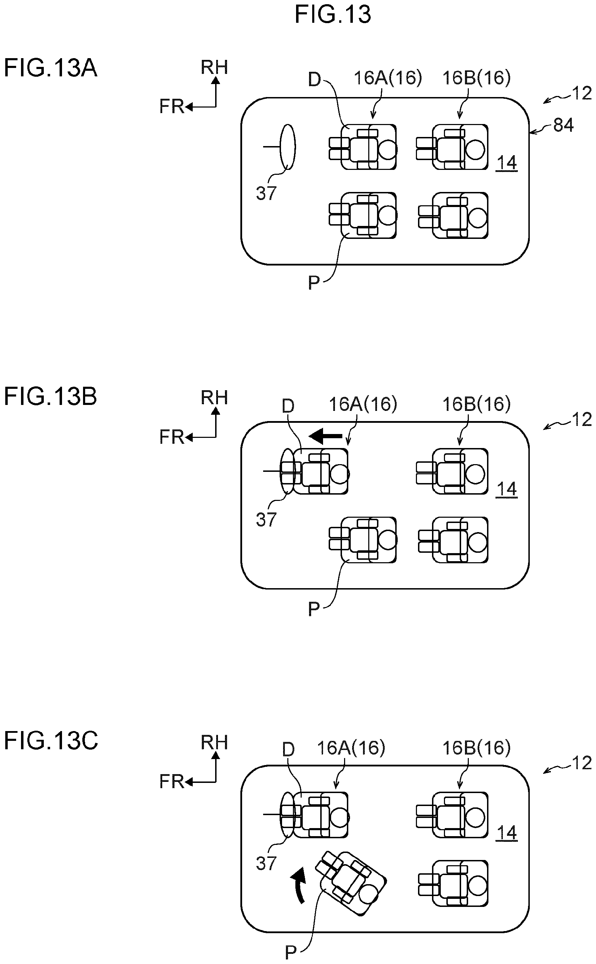

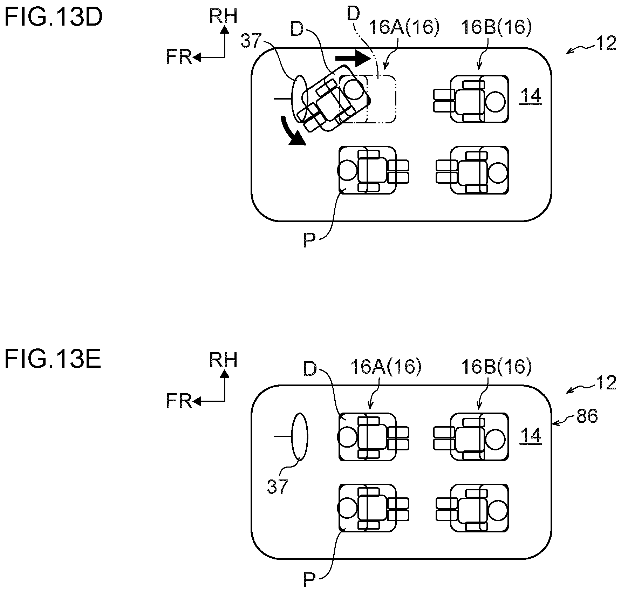

The seat rotator device 52 is a device that rotates the vehicle seat 16 about a shaft running along the vehicle vertical direction. Normally, each of the vehicle seats 16 is disposed so as to face the vehicle front side as illustrated in Fig. 10A. However, for example, front seats 16A are capable of pivoting toward a vehicle width direction inner side (cabin inner side) as illustrated in Fig. 13C. Although not illustrated in the drawings, the front seats 16A are also capable of pivoting toward a vehicle width direction outer side (cabin outer side). Moreover, the front seats 16A can also be rotated (pivoted) through 180° as illustrated in Fig. 13E so as to be disposed facing toward the vehicle rear side and so as to be face-to-face with rear seats 16B.

Each of the occupant detection devices 42 includes in-cabin cameras 54 and a seat load detection device 56.

The in-cabin cameras 54 are, for example, provided at a central portion of a ceiling of the cabin interior 14 and at vehicle side sections of the cabin interior 14 so as to be capable of capturing a state inside the cabin interior 14. The in-cabin cameras 54 make it possible to check whether or not occupants are sitting on the respective vehicle seats 16 in the cabin interior 14, and also make it possible to check the posture, build, leg positions, and the like of occupants sitting on the respective vehicle seats 16.

The seat load detection device 56 is a device that detects load from an occupant sitting on the corresponding vehicle seat 16. Note that the body weight of an occupant is related to the movement speed of the moving vehicle seat 16 when the vehicle seat 16 is moved.

The alert device 44 is a device that generates a warning in the cabin interior 14. Note that this warning may include not only a sound but also speech.

### Functional Configuration of Vehicle Seat Control Device

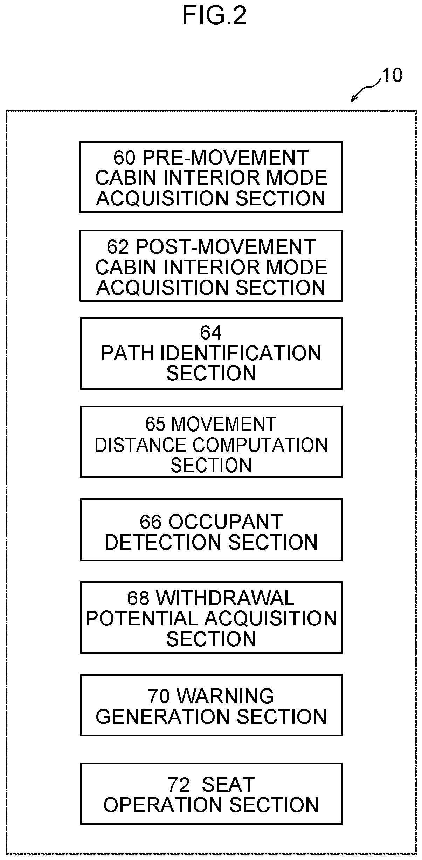

The vehicle seat control device 10 according to the first exemplary embodiment implements various functionality employing the hardware resources illustrated in Fig. 1. Explanation follows regarding the functional configurations implemented by the vehicle seat control device 10, with reference to Fig. 2.

As illustrated in Fig. 2, the vehicle seat control device 10 includes as functional configurations a pre-movement cabin interior mode acquisition section 60 serving as a first seat arrangement information acquisition section, a post-movement cabin interior mode acquisition section 62 serving as a second seat arrangement information acquisition section, a path identification section 64, a movement distance computation section 65, an occupant detection section 66, a withdrawal potential acquisition section 68, a warning generation section 70, and a seat operation section 72. These functional configurations are implemented by the CPU 24 illustrated in Fig. 1 reading and executing a program stored in the ROM 26 or the storage 30.

The pre-movement cabin interior mode acquisition section 60 acquires a seat arrangement P serving as a current first seat arrangement from position information of the vehicle seats 16, these being the front seats 16A serving as moving seats and the rear seats 16B serving as other seats in this example, as obtained by the seat actuator devices 38 and stored in the ROM 26 or the storage 30.

The post-movement cabin interior mode acquisition section 62 acquires for example a seat arrangement Q serving as a second seat arrangement of the vehicle seats 16 after moving as illustrated in Fig. 10B, as requested by an occupant from data held in the ROM 26 or the storage 30.

The path identification section 64 identifies a movement path of the vehicle seats 16 to be moved, namely the front seats 16A in this example, based on the current seat arrangement P for the plural vehicle seats 16 as illustrated in Fig. 10A acquired from the pre-movement cabin interior mode acquisition section 60, and the seat arrangement Q for the vehicle seats 16 after moving as illustrated in Fig. 10B acquired from the post-movement cabin interior mode acquisition section 62.

The movement distance computation section 65 computes a movement distance L1 of the vehicle seats 16 between the current seat arrangement P of the vehicle seats 16 and the post-movement seat arrangement Q of the vehicle seats 16 from the position information and the like of the vehicle seats 16 obtained by the seat actuator devices 38 illustrated in Fig. 1. Note that a non-illustrated calculation section is capable of computing the distance between the front seats 16A and the legs of occupants sitting on the rear seats 16B from image information captured by the in-cabin cameras 54.

The occupant detection section 66 actuates the occupant detection devices 42 illustrated in Fig. 1 of other vehicle seats 16, in this example the rear seats 16B, that are disposed peripherally to the movement path of the front seats 16A as identified by the path identification section 64, in order to check for the presence of seated occupants and check the foot positions of such occupants using the in-cabin cameras 54. The seat load detection devices 56 are also used to detect the load of occupants sitting on the front seats 16A to be moved.

The withdrawal potential acquisition section 68 first acquires a potential withdrawal movement amount (referred to as leeway) of the occupants sitting on the rear seats 16B in the event of interference with the moving front seats 16A. Since the in-cabin cameras 54 are capable of checking the posture, build, leg positions, and the like of the occupants sitting on the respective vehicle seats 16, this leeway can be computed from image information captured by the in-cabin cameras 54 as described previously.

For example, as illustrated in Fig. 10A and Fig. 10B, a movement distance of the front seats 16A when moving from the current seat arrangement P to the seat arrangement Q of the front seats 16A is denoted L1, and as illustrated in Fig. 10A, the leeway (distance) between the front seats 16A in the seat arrangement P and the legs of occupants seated in the rear seats 16B is denoted L2.

In a case in which the leeway L2 between the front seats 16A and the (legs of) the occupants sitting on the rear seats 16B is larger than the movement distance L1 of the front seats 16A (L1 < L2), the front seats 16A will not interfere with the occupants sitting on the rear seats 16B even if the front seats 16A move from the seat arrangement P to the seat arrangement Q. Even supposing the front seats 16A were to interfere with the occupants sitting on the rear seats 16B, the leeway L2 allows the occupants to withdraw the part where the interference occurs. In such cases, there is a high potential for withdrawal without any particular problems arising.

On the other hand, in a case in which the leeway L2 between the front seats 16A and the occupants sitting on the rear seats 16B is smaller than the movement distance L1 of the front seats 16A (L1 > L2), the front seats 16A will interfere with the occupants sitting on the rear seats 16B. Although not illustrated in the drawings, in a case in which leeway is provided between the legs of the occupants sitting on the rear seats 16B and the rear seats 16B, it is possible for the occupants to withdraw the part where the interference occurs. However, in a case in which such leeway is not present, it becomes difficult to withdraw the part where the interference occurs. In such cases, the legs of the occupants may become trapped between the moving front seats 16A and the rear seats 16B, and so there is a low potential for withdrawal. In such cases, the movement amount of the vehicle seats 16 by the seat actuator devices 38 illustrated in Fig. 1 is reduced (the movement distance is shortened), or movement of the vehicle seats 16 is canceled.

The warning generation section 70 actuates the alert device 44 illustrated in Fig. 1 so as to issue a warning in the cabin interior 14. Note that the warning generation section 70 is not an essential element.

The seat operation section 72 actuates the seat actuator devices 38. Each of the seat actuator devices 38 operates the corresponding vehicle seat 16 so as to move along its movement path. For example, the seat slider device 48 may slide the vehicle seat 16 along the vehicle front-rear direction, or the seat rotator device 52 may rotate the vehicle seat 16 about the shaft running in the vehicle vertical direction. Note that the tilt device 46 and the recliner device 50 may also be actuated.

### Operation and Advantageous Effects of Vehicle Seat Control Device

Next, explanation follows regarding operation and advantageous effects of the vehicle seat control device according to the present exemplary embodiment.

First, explanation follows regarding orientations of the vehicle seats 16.

As illustrated in Fig. 3, in a driving orientation in which the driver is driving, the seat position of the vehicle seat 16 on a driver's seat side is disposed at a vehicle front-rear direction front side in order for the driver to grip the steering wheel 37. For example, the vehicle seat 16 on the driver's seat side is disposed further toward the vehicle front side than a center pillar 15, this being part of a framework member extending along the vehicle vertical direction at a vehicle side section, and a reclining angle of the vehicle seat 16 is set to θ1 (a seat setting A, referred to as a driving position setting).

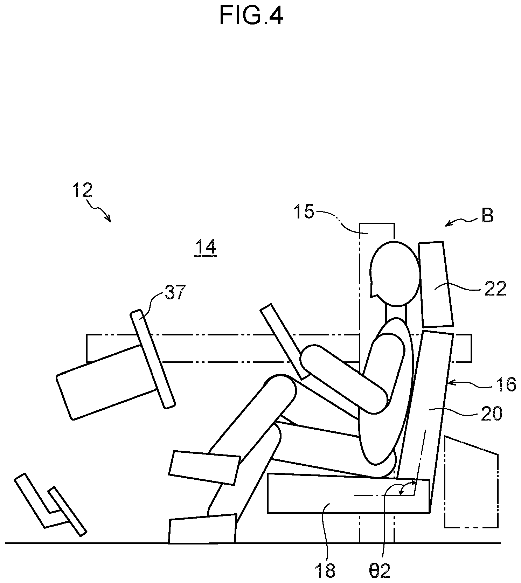

On the other hand, in a case in which the driver is not driving, in an activity orientation for performing an activity such as reading a book as illustrated in Fig. 4, the corresponding seat slider device 48 (see Fig. 1) disposes the seat position of the vehicle seat 16 on the driver's seat side further toward the vehicle rear side than the seat setting A (see Fig. 3). For example, the seatback 20 of the vehicle seat 16 on the driver's seat side is disposed further toward the vehicle rear side than the center pillar 15.

In this state (a seat setting B), the reclining angle of the vehicle seat 16 on the driver's seat side is set to θ2. Although θ2 is a similar angle to θ1 (see Fig. 3) in this example, the reclining angle θ2 may be set larger than the reclining angle θ1.

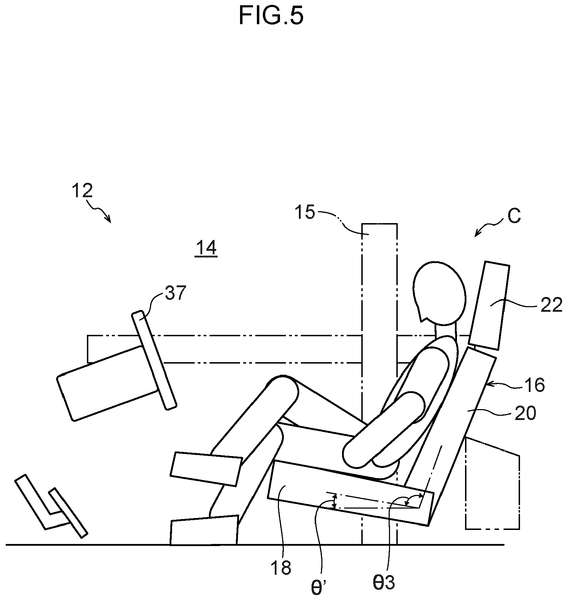

As illustrated in Fig. 5, in a resting orientation while the driver is resting, the seat position of the vehicle seat 16 is disposed further toward the vehicle rear side than the seat setting A (see Fig. 3). Moreover, a reclining angle θ3 is set larger than the reclining angle θ1 (a seat setting C). Note that in this state, the tilt device 46 may set a tilt angle θ' to a larger angle than when in the activity orientation illustrated in Fig. 4.

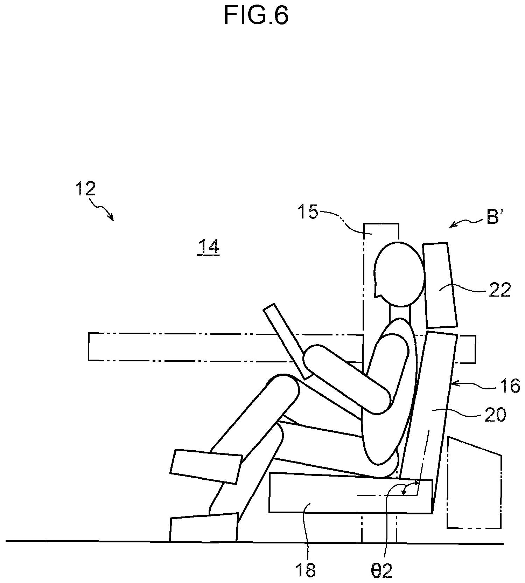

Fig. 6 illustrates an activity orientation when an occupant of a vehicle seat 16 other than the driver's seat (including a front passenger seat) is performing an activity. In this state, a seat setting B' of the vehicle seat 16 is substantially the same as the seat setting B of the vehicle seat 16 on the driver's seat side illustrated in Fig. 4.

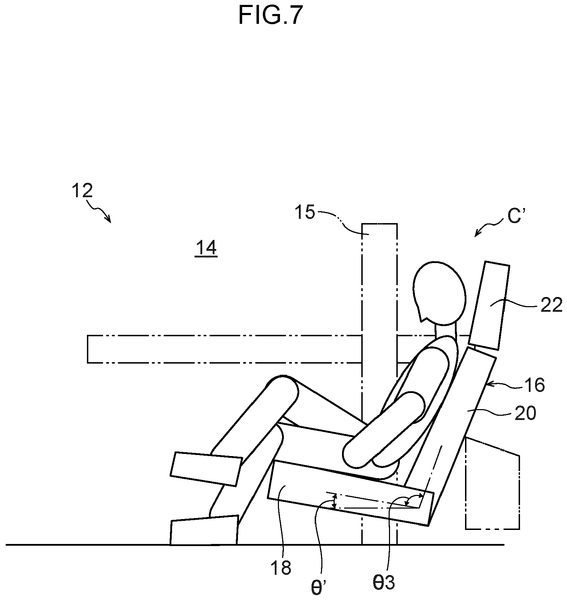

Fig. 7 illustrates a resting orientation when an occupant of a vehicle seat 16 other than the driver's seat is resting. In this state, a seat setting C' of the vehicle seat 16 is similar to the seat setting C of the vehicle seat 16 on the driver's seat side illustrated in Fig. 5.

Note that as illustrated in Fig. 4 and Fig. 5, in a case in which the driver is not driving, the telescopic device 36 may be actuated to move the steering wheel 37 toward the vehicle front-rear direction front side.

### Cabin Interior Modes

Although not illustrated in the drawings, cases may arise in which the seat positions of the vehicle seats 16 in the vehicle front-rear direction differ between the driver's seat side and the front passenger seat side. Cases may also arise in which the angles of the vehicle seat 16 about vehicle vertical direction axes differ between the driver's seat side and the front passenger seat side. In each case, the cabin interior 14 is in a different cabin interior mode, resulting in a complex range of cabin interior modes. In the following explanation, in order to simplify understanding of the cabin interior modes, explanation is limited to a first cabin interior mode 74, a second cabin interior mode 76, and a third cabin interior mode 78, respectively illustrated in Fig. 8A to Fig. 8C. Namely, in these cabin interior modes, the vehicle front-rear direction positions of the respective vehicle seats 16 on the left and right in the vehicle width direction are substantially the same as each other, and all of the vehicle seats 16 are facing toward the vehicle front side.

Fig. 8A is a plan view illustrating the first cabin interior mode 74. As illustrated in Fig. 8A, the first cabin interior mode 74 corresponds to a state in which the driver is driving (see Fig. 3). Accordingly, the front seats 16A are disposed toward the vehicle front-rear direction front side, and the rear seats 16B are disposed close to a vehicle rear side of the front seats 16A.

Fig. 8B is a plan view illustrating the second cabin interior mode 76. As illustrated in Fig. 8B, the second cabin interior mode 76 corresponds to the resting orientation when the driver is resting (see Fig. 5), and the front seats 16A are disposed further toward the vehicle front-rear direction rear side than when in the first cabin interior mode 74. Accompanying this, the rear seats 16B are also disposed further toward the vehicle front-rear direction rear side than when in the first cabin interior mode 74.

Note that the reclining angle θ3 of the front seats 16A (see Fig. 5) is set larger than the reclining angle θ1 applied when at the driving position setting illustrated in Fig. 3. Although not illustrated in the drawings, in order to create as much space as possible on the front seat 16A side, the telescopic device 36 (see Fig. 1) may be actuated to move the steering wheel 37 along the vehicle front-rear direction.

Fig. 8C is a perspective view illustrating the third cabin interior mode 78. As illustrated in Fig. 8C, the third cabin interior mode 78 corresponds to the activity orientation when the driver is performing an activity (see Fig. 4), and the front seats 16A and the rear seats 16B are respectively disposed further toward the vehicle front-rear direction rear side than when in the first cabin interior mode 74, similarly to in the case of the second cabin interior mode 76. Moreover, in this state, the reclining angle θ2 of the front seats 16A (see Fig. 4) is substantially the same as the reclining angle θ1 applied when at the driving position setting illustrated in Fig. 3.

### Vehicle Seat Transition Process

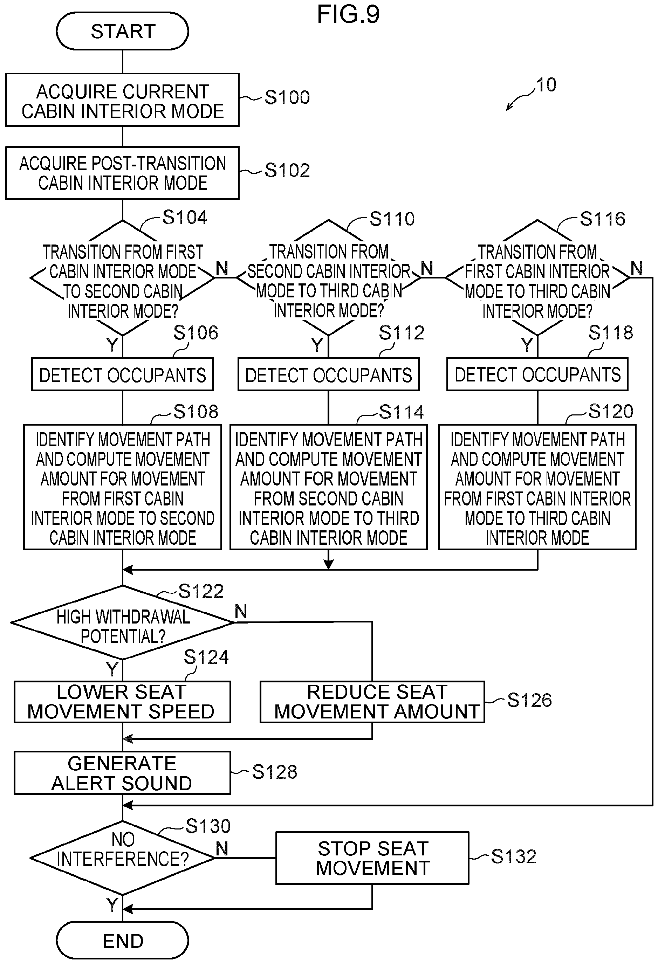

Next, explanation follows regarding transition process of the vehicle seats 16 illustrated in Fig. 8A to Fig. 8C, with reference to the flowchart illustrated in Fig. 9.

Note that the transition process of the vehicle seats 16 is executed by the CPU 24 illustrated in Fig. 1 reading a program from the ROM 26 or the storage 30, and expanding and executing the program in the RAM 28. Moreover, as described above, in the present exemplary embodiment, for ease of explanation, explanation is limited to the first cabin interior mode 74, the second cabin interior mode 76, and the third cabin interior mode 78 illustrated in Fig. 8A to Fig. 8C, and so only some of the transition process of the vehicle seats 16 is illustrated in Fig. 9.

As illustrated in Fig. 9, at step S 100, the CPU 24 uses the pre-movement cabin interior mode acquisition section 60 (see Fig. 2) to acquire position information of the vehicle seats 16 in the current cabin interior mode of the cabin interior 14.

Next, at step S102, the CPU 24 uses the post-movement cabin interior mode acquisition section 62 (see Fig. 2) to acquire position information of the vehicle seats 16 in a post-transition cabin interior mode.

At step S 104, the CPU 24 determines whether or not the transition is from the first cabin interior mode 74 illustrated in Fig. 8A to the second cabin interior mode 76 illustrated in Fig. 8B.

In a case in which the CPU 24 determines that the cabin interior mode of the cabin interior 14 is to transition from the first cabin interior mode 74 to the second cabin interior mode 76 at step S 104 (step S 104: YES), process transitions to step S106.

At step S 106, the CPU 24 uses the occupant detection section 66 (see Fig. 2) to employ the in-cabin cameras 54 (see Fig. 1) to detect the presence of occupants sitting on the respective vehicle seats 16 (in this case, the front seats 16A and the rear seats 16B) and the positions of the legs of such occupants, and also to employ the corresponding seat load detection devices 56 (see Fig. 1) to detect the body weights and the like of these occupants.

Next, at step S 108, the CPU 24 uses the path identification section 64 (see Fig. 2) to identify a movement path and compute a movement amount of the front seats 16A when the vehicle seats 16 (namely the front seats 16A) move from the first cabin interior mode 74 illustrated in Fig. 8A to the second cabin interior mode 76 illustrated in Fig. 8B. Process then transitions to step S122.

On the other hand, in a case in which the CPU 24 determines that the cabin interior mode of the cabin interior 14 is not to transition from the first cabin interior mode 74 to the second cabin interior mode 76 at step S104 (step S 104: NO), process transitions to step S110.

At step S110, the CPU 24 determines whether or not the transition is from the second cabin interior mode 76 illustrated in Fig. 8B to the third cabin interior mode 78 illustrated in Fig. 8C.

In a case in which the CPU 24 determines that the cabin interior mode of the cabin interior 14 is to transition from the second cabin interior mode 76 to the third cabin interior mode 78 at step S110 (step S110: YES), process transitions to step S112.

At step S112, the CPU 24 uses the occupant detection section 66 to employ the in-cabin cameras 54 to detect the presence of occupants sitting on the front seats 16A and the rear seats 16B and the positions of the legs of such occupants, and also to employ the corresponding seat load detection devices 56 to detect the body weights and the like of these occupants.

Next, at step S114, the CPU 24 uses the path identification section 64 to identify a movement path and compute a movement amount of the front seats 16A when the front seats 16A move from the second cabin interior mode 76 illustrated in Fig. 8B to the third cabin interior mode 78 illustrated in Fig. 8C. Process then transitions to step S122.

On the other hand, in a case in which the CPU 24 determines that the cabin interior mode of the cabin interior 14 is not to transition from the second cabin interior mode 76 illustrated in Fig. 8B to the third cabin interior mode 78 illustrated in Fig. 8C at step S 110 (step S110: NO), process transitions to step S116.

At step S116, the CPU 24 determines whether or not the transition is from the first cabin interior mode 74 illustrated in Fig. 8A to the third cabin interior mode 78 illustrated in Fig. 8C.

In a case in which the CPU 24 determines that the cabin interior mode of the cabin interior 14 is to transition from the first cabin interior mode 74 illustrated in Fig. 8A to the third cabin interior mode 78 illustrated in Fig. 8C at step S116 (step S116: YES), process transitions to step S118.

At step S118, the CPU 24 uses the occupant detection section 66 to employ the in-cabin cameras 54 to detect the presence of occupants sitting on the front seats 16A and the rear seats 16B and the positions of the legs of such occupants, and also to employ the corresponding seat load detection devices 56 to detect the body weights and the like of these occupants.

Next, at step S 120, the CPU 24 uses the path identification section 64 to identify a movement path and compute a movement amount of the front seats 16A when the front seats 16A move from the first cabin interior mode 74 illustrated in Fig. 8A to the third cabin interior mode 78 illustrated in Fig. 8C. Process then transitions to step S122.

On the other hand, in a case in which the CPU 24 determines that the cabin interior mode of the cabin interior 14 is not to transition from the first cabin interior mode 74 illustrated in Fig. 8A to the third cabin interior mode 78 illustrated in Fig. 8C at step S116 (step S116: NO), process transitions to step S130.

At step S122, the CPU 24 uses the withdrawal potential acquisition section 68 (see Fig. 2) to determine whether or not the potential for withdrawal is high.

In a case in which occupants are detected sitting on the rear seats (other seats) 16B disposed peripherally to the movement path of the front seats 16A based on the movement path of the front seats 16A identified at step S 108, S 114, or S 120, the CPU 24 determines the withdrawal potential should the front seats 16A interfere with (contact) the occupants while moving, while taking the position of the legs of the occupants into consideration.

As described previously, cases in which the potential for withdrawal is high correspond to cases in which the leeway L2 between the front seats 16A and the occupants sitting on the rear seats 16B is such that the front seats 16A will not interfere with the occupants sitting on the rear seats 16B after moving, or should interference occur, the part where the interference occurs can be withdrawn. On the other hand, cases in which the potential for withdrawal is low correspond to cases in which there is a possibility of the legs of the occupants becoming trapped between the moving front seats 16A and the rear seats 16B in which these occupants are sitting.

In a case in which the CPU 24 determines the potential for withdrawal to be high at step S 122 (step S 122: YES), at step S 124, the movement speed of the front seats 16A is lowered. Accordingly, the front seats 16A move slowly, giving the occupants time to move their legs or the like while the front seats 16A are moving and thus enable interference between the moving front seats 16A and the occupants sitting on the rear seats 16B to be suppressed.

On the other hand, in a case in which the CPU 24 determines the potential for withdrawal to be low at step S 122 (step S 122: NO), process transitions to step S126.

At step S 126, the CPU 24 reduces the movement amount of the front seats 16A. This enables interference between the moving front seats 16A and the occupants sitting on the rear seats 16B to be suppressed.

Then, at step S128, the CPU 24 uses the warning generation section 70 (see Fig. 2) to generate an alert sound regarding the moving front seats 16A.

Next, at step S130, the CPU 24 determines whether or not the moving front seats 16A have not interfered with the occupants (no interference).

In a case in which the CPU 24 determines that the moving front seats 16Ahave not interfered with the occupants at step S 130 (step S 130: YES), the front seats 16A are transitioned to their predetermined positions (the second seat arrangement), and the process flow is ended.

On the other hand, in a case in which the CPU 24 determines that the moving vehicle seats 16 have interfered with the occupants at step S 130 (step S 130: NO), at step S132, the CPU 24 stops the movement of the front seats 16A, returns the front seats 16A to their former positions, and ends the process flow.

Note that in this example, the seat operation section 72 executes an emergency stop of the front seats 16A in a case in which the moving front seats 16A have interfered with the occupants, the moving front seats 16A have interfered with the rear seats 16B, or the like.

Accordingly, the present exemplary embodiment is capable of responding to unexpected situations, such as cases in which an occupant makes a sudden movement resulting in the occupant interfering with the front seats 16A. Note that an emergency stop of the front seats 16A may also be executed not only in a case in which interference occurs with an occupant but also in a case in which interference occurs with an animal, luggage, or the like.

Due to the configuration described above, in the vehicle seat control device 10 of the present exemplary embodiment, the seat operation section 72 (see Fig. 1) for example reduces the movement speed of vehicle seats 16 in a case in which an occupant sitting on a vehicle seat 16 disposed peripherally to the movement path of these vehicle seats 16 is detected by the occupant detection section 66 (see Fig. 2). This enables interference between the moving vehicle seats 16 and occupants sitting on the other vehicle seats 16 to be suppressed when moving the vehicle seats 16.

Moreover, in the vehicle seat control device 10 of the present exemplary embodiment, as illustrated in Fig. 9, in a case in which the withdrawal potential acquisition section 68 (see Fig. 2) determines the potential for withdrawal to be low at step S122, the CPU 24 is set so as to reduce the movement amount of the vehicle seats 16 at step S124.

Accordingly, in the present exemplary embodiment, the leeway provided between the moving vehicle seats 16 and the other vehicle seats 16 can be made larger, enabling interference between the moving vehicle seats 16 and occupants sitting on the other vehicle seats 16 to be suppressed.

On the other hand, in a case in which the leeway L2 (see Fig. 10A) between the front seats 16A and the legs of the occupants sitting on the rear seats 16B is smaller than the movement distance L1 (see Fig. 10B) of the moving front seats 16A, it is foreseen that the legs of the occupants could become trapped between the moving front seats 16A and the rear seats 16B in which these occupants are sitting. In such cases, the seat operation section 72 prohibits movement of these vehicle seats 16.

Accordingly, the present exemplary embodiment enables interference between the moving vehicle seats 16 and occupants sitting on the other vehicle seats 16 to be avoided.

Moreover, in the present exemplary embodiment, in a case in which an occupant sitting on another vehicle seat 16 disposed peripherally to the movement path of the moving vehicle seats 16 is detected, the warning generation section 70 issues a warning in the cabin interior 14.

This enables occupants in the surroundings to be encouraged to pay attention when the vehicle seats 16 are to be moved, thus enabling interference between the moving vehicle seats 16 and the occupants to be suppressed by the occupants sitting on the other vehicle seats 16 moving their legs of the way or the like.

Note that since the other vehicle seats 16 disposed peripherally to the movement path are identified according to the movement path identified by the path identification section 64, the warning may be issued to these identified vehicle seats 16 so as to be noticeable only to those occupants that are sitting on the vehicle seats 16 disposed peripherally to the movement path of the moving vehicle seats 16. Since the warning is not issued to occupants other than the occupants sitting on the vehicle seats 16 disposed peripherally to the movement path of the moving vehicle seats 16, disturbance to these other occupants can be alleviated.

### Second Exemplary Embodiment

Next, explanation follows regarding a vehicle seat control device according to a second exemplary embodiment. Note that the basic configuration of the vehicle seat control device of the present exemplary embodiment is similar to the configuration of the vehicle seat control device of the first exemplary embodiment. Accordingly, explanation regarding details matching those of the first exemplary embodiment will be omitted from the present exemplary embodiment.

As an example, in the present exemplary embodiment, in a case in which the driver decides that they want to transition from the driving mode illustrated in Fig. 3 to the activity orientation or the resting orientation illustrated in Fig. 4 and Fig. 5 respectively, each of the corresponding vehicle seats 16 is transitioned from the seat setting A to the seat setting B or the seat setting C. Namely, in such cases, the corresponding vehicle seats 16 transition from the seat arrangement P illustrated in Fig. 10A to the seat arrangement Q illustrated in Fig. 10B.

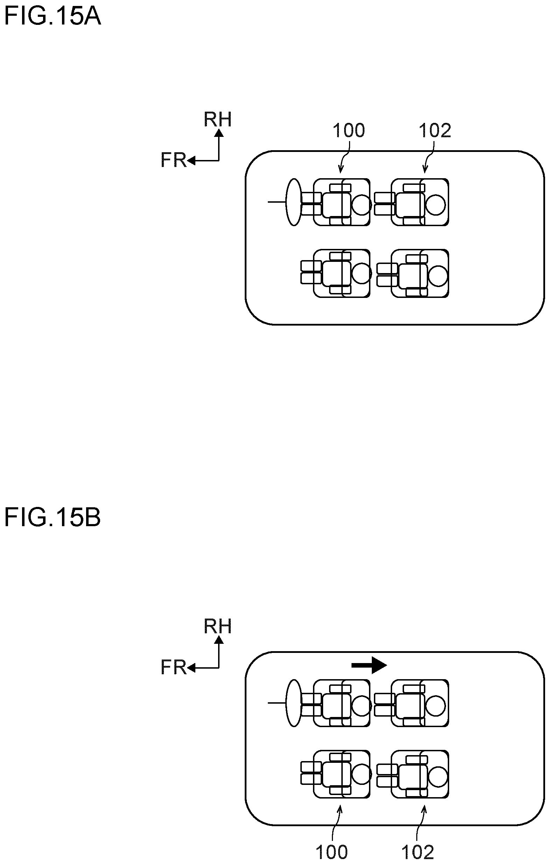

As a comparative example, consider a case such as that illustrated in Fig. 15A in which rear seats 102 are disposed close to the vehicle rear side of front seats 100, and occupants are sitting on the rear seats 102. In such a case, as illustrated in Fig. 15B, if the front seats 100 are moved toward the vehicle front-rear direction rear side, there would be a possibility of the front seats 100 interfering with the legs of the occupants sitting on the rear seats 102.

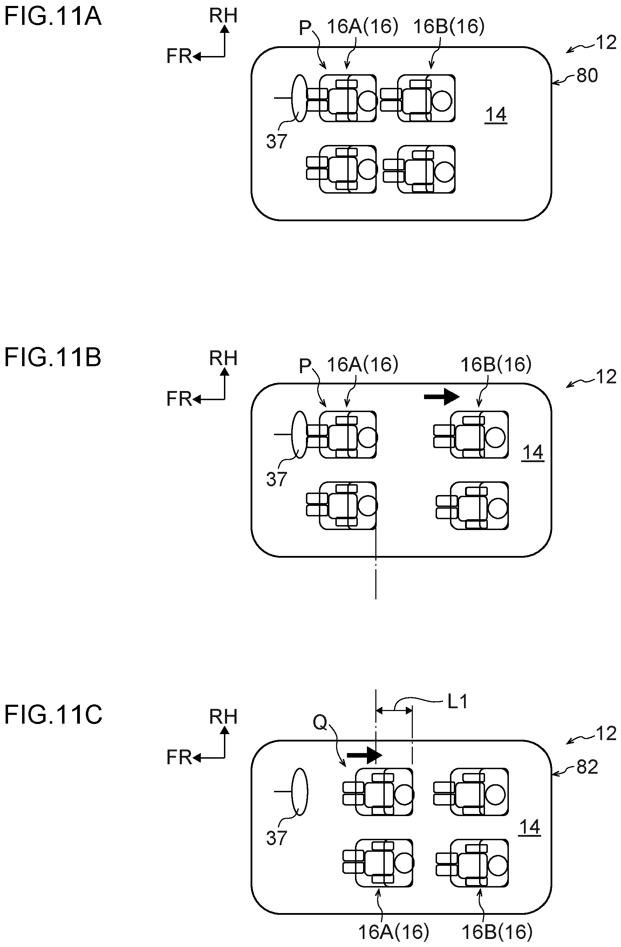

By contrast, in the present exemplary embodiment, as illustrated in Fig. 11A, in a case in which the rear seats 16B are disposed at the vehicle rear side of the front seats 16A and occupants are sitting on the rear seats 16B, first, as illustrated in Fig. 11B, the rear seats 16B are moved toward the vehicle front-rear direction rear side. Following this, as illustrated in Fig. 11C, the front seats 16A are moved toward the vehicle front-rear direction rear side.

Accordingly, in the present exemplary embodiment, the front seats 16A can be transitioned from the seat arrangement P to the seat arrangement Q, and the front seats 16A can be prevented or suppressed from interfering with the legs of the occupants sitting on the rear seats 16B.

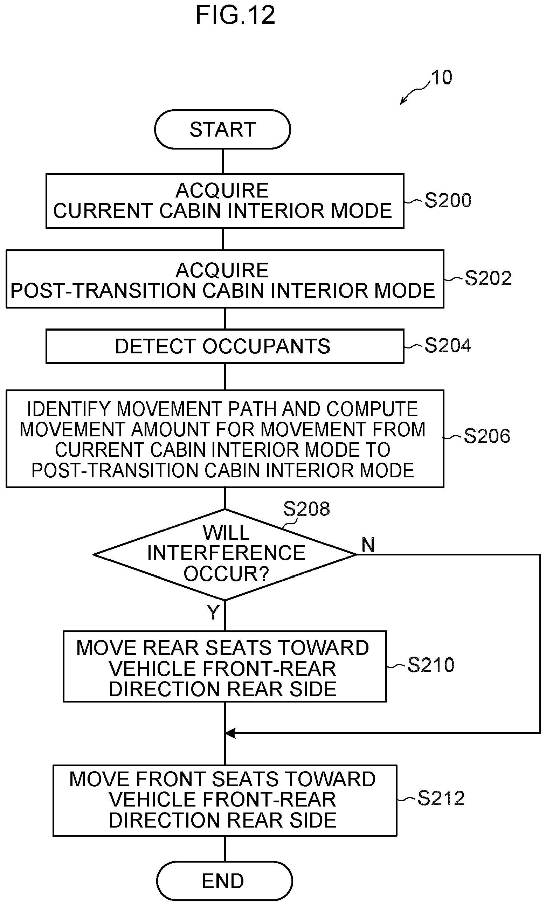

Explanation follows regarding transition process of the vehicle seats 16 illustrated in Fig. 11A to Fig. 11C, with reference to the flowchart illustrated in Fig. 12. Note that the transition process of the vehicle seats 16 is executed by the CPU 24 illustrated in Fig. 1 reading a program from the ROM 26 or the storage 30, and expanding and executing the program in the RAM 28.

As illustrated in Fig. 12, at step S200, the CPU 24 uses the pre-movement cabin interior mode acquisition section 60 (see Fig. 2) to acquire position information of the vehicle seats 16 corresponding to a current cabin interior mode 80 (see Fig. 11A) of the cabin interior 14.

Next, at step S202, the CPU 24 uses the post-movement cabin interior mode acquisition section 62 (see Fig. 2) to acquire position information of the vehicle seats 16 corresponding to in a post-transition cabin interior mode 82 (see Fig. 11C).

At step S204, the CPU 24 uses the occupant detection section 66 (see Fig. 2) to employ the in-cabin cameras 54 (see Fig. 1) to detect the presence of occupants sitting on the front seats 16A and the rear seats 16B and the positions of the legs of such occupants, and also to employ the corresponding seat load detection devices 56 (see Fig. 1) to detect the body weights and the like of these occupants.

Next, at step S206, the CPU 24 uses the path identification section 64 (see Fig. 2) to identify a movement path and compute a movement amount (in this case the movement amount from the seat arrangement P to the seat arrangement Q) of the front seats 16A when moving the front seats 16A in order to transition from the current cabin interior mode 80 to the post-transition cabin interior mode 82. Process then transitions to step S208.

At step S208, the CPU 24 determines whether or not the front seats 16A will interfere with the legs of the occupants sitting on the rear seats 16B when the front seats 16A move from the current cabin interior mode 80 to the post-transition cabin interior mode 82.

In a case in which the CPU 24 has determined that the front seats 16A will interfere with the legs of the occupants sitting on the rear seats 16B at step S208 (step S208: YES), process transitions to step S210.

At step S210, the CPU 24 first moves the rear seats 16B toward the vehicle front-rear direction rear side away from the front seats 16A. At step S212, the CPU 24 then moves the front seats 16A toward the vehicle front-rear direction rear side so as to transition the front seats 16A to the seat arrangement Q, and then ends the process flow.

On the other hand, in a case in which the CPU 24 has determined that the front seats 16A will not interfere with the legs of the occupants sitting on the rear seats 16B at step S208 (step S208: NO), process transitions to step S212.

In this manner, in the present exemplary embodiment, when it is foreseen that the front seats 16A will interfere, the rear seats 16B including occupants are moved toward the vehicle front-rear direction rear side before moving the front seats 16A toward the vehicle front-rear direction rear side. This enables interference between the front seats 16A and the rear seats 16B, including interference between the front seats 16A and the occupants seated in the rear seats 16B, to be suppressed.

Next, explanation follows regarding a case in which, as an example, the front seats 16A are to be disposed facing the rear seats 16B as illustrated in Fig. 13E.

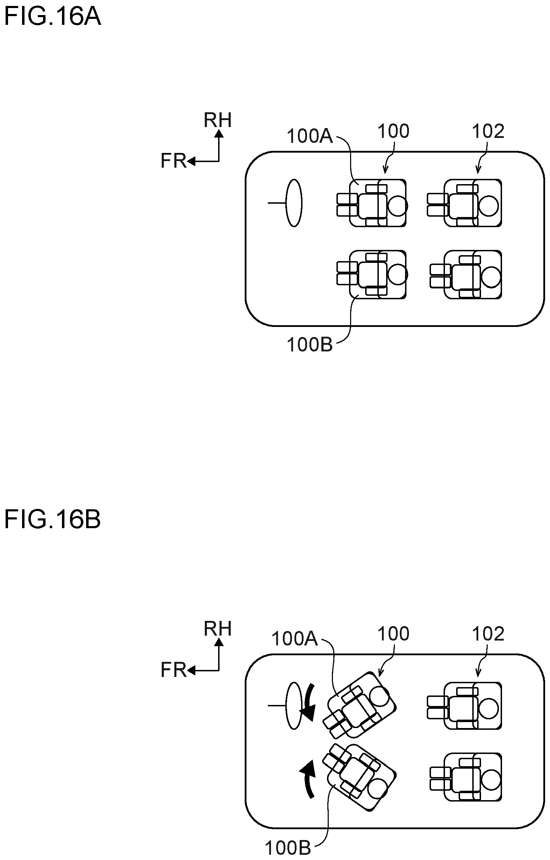

As a comparative example, if a driver's seat 100A and a front passenger seat 100B of the front seats 100 were rotated through 180° at the same time as each other as illustrated in Fig. 16A and Fig. 16B, the occupants of the driver's seat 100A and the front passenger seat 100B would interfere with each other. This would prevent rotation of the driver's seat 100A and the front passenger seat 100B. Namely, in such cases, it would not be possible to dispose the front seats 100 so as to face the rear seats 102.

By contrast, in the present exemplary embodiment, when disposing the front seats 16A so as to face the rear seats 16B as illustrated in Fig. 13E, first, as illustrated in Fig. 13A and Fig. 13B, a driver's seat D serving as a moving seat or another seat on the front seat 16A side is moved toward the vehicle front-rear direction front side.

Note that when this is performed, in order to move the driver's seat D as far as possible toward the vehicle front-rear direction front side, the telescopic device 36 (see Fig. 1) may be actuated to move the steering wheel 37 in the vehicle front-rear direction. Alternatively, instead of the driver's seat D, a front passenger seat P may be moved toward the vehicle front-rear direction front side.

Next, as illustrated in Fig. 13C, the front passenger seat P also serving as another seat or a moving seat is rotated so as to face the rear seats 16B as illustrated in Fig. 13D. Next, the driver's seat D is rotated and then moved toward the vehicle front-rear direction rear side.

Then, the driver's seat D is made to face the rear seats 16B as illustrated in Fig. 13E. The front seats 16A and the rear seats 16B are disposed so as to face each other in this manner.

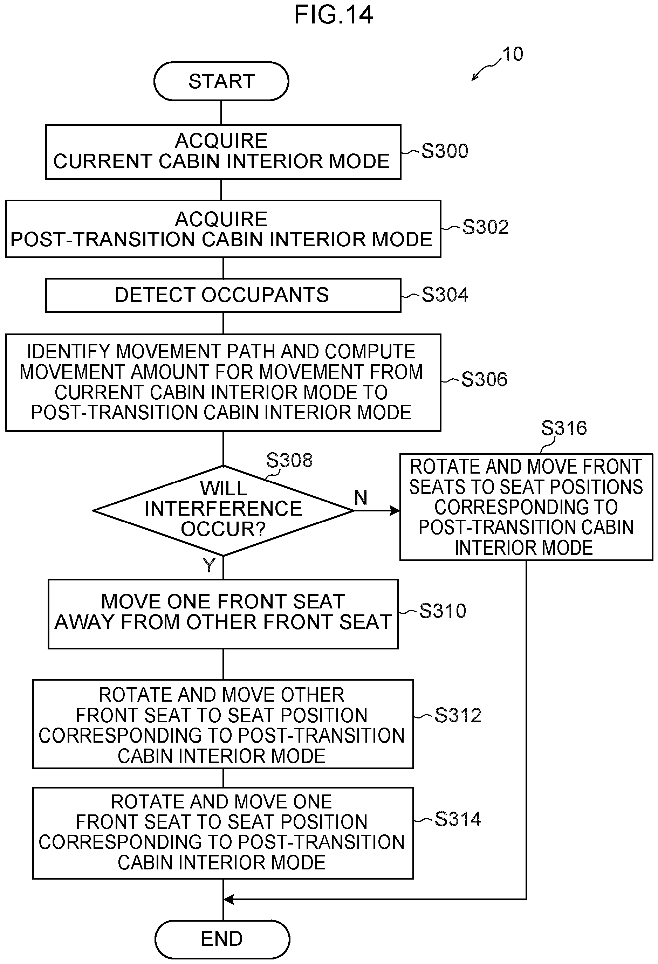

Explanation follows regarding transition process of the vehicle seats 16 illustrated in Fig. 13A to Fig. 13E, with reference to the flowchart illustrated in Fig. 14. Note that the transition process of the vehicle seats 16 is executed by the CPU 24 illustrated in Fig. 1 reading a program from the ROM 26 or the storage 30, and expanding and executing the program in the RAM 28.

As illustrated in Fig. 14, at step S300, the CPU 24 uses the pre-movement cabin interior mode acquisition section 60 (see Fig. 2) to acquire position information of the vehicle seats 16 corresponding to a current cabin interior mode 84 (see Fig. 13A) of the cabin interior 14.

Next, at step S302, the CPU 24 uses the post-movement cabin interior mode acquisition section 62 (see Fig. 2) to acquire position information of the vehicle seats 16 corresponding to a post-transition cabin interior mode 86 (see Fig. 13E).

At step S304, the CPU 24 uses the occupant detection section 66 (see Fig. 2) to employ the in-cabin cameras 54 (see Fig. 1) to detect the presence of occupants sitting on the front seats 16A and the rear seats 16B and the positions of the legs of such occupants, and also to employ the corresponding seat load detection devices 56 (see Fig. 1) to detect the body weights and the like of these occupants.

Next, at step S306, the CPU 24 uses the path identification section 64 (see Fig. 2) to identify a movement path and compute a movement amount of the front seats 16A when moving the vehicle seats 16 (front seats 16A) from the current cabin interior mode 84 to the post-transition cabin interior mode 86. Process then transitions to step S308.

At step S308, the CPU 24 determines whether or not the front seats 16A will interfere with the occupants sitting on the other vehicle seats 16 (rear seats 16B) when the front seats 16A move from the current cabin interior mode 84 to the post-transition cabin interior mode 86.

In a case in which the CPU 24 has determined that the front seats 16A will interfere with the occupants sitting on the rear seats 16B at step S308 (step S308: YES), process transitions to step S310.

At step S310, the CPU 24 moves one of the front seats 16A (the driver's seat D in this example) away from (moves toward the vehicle front-rear direction front side of in this example) the other of the front seats 16A (the front passenger seat P in this example).

At step S312, the CPU 24 then rotates the front passenger seat P so as to face the rear seats 16B as illustrated in Fig. 13D.

Next, at step S314, the CPU 24 rotates the driver's seat D and moves the driver's seat D toward the vehicle front-rear direction rear side so as to face the rear seats 16B as illustrated in Fig. 13E. The front seats 16A and the rear seats 16B are disposed facing each other (second seat arrangement) in this manner. The process flow is then ended.

On the other hand, in a case in which the CPU 24 has determined that the front seats 16A will not interfere with the occupants sitting on the rear seats 16B at step S308 (step S308: NO), process transitions to step S316.

At step S316, the CPU 24 rotates the front seats 16A so as to face the rear seats 16B, and ends the process flow.

In this manner, in the present exemplary embodiment, the positions of the driver's seat D and the front passenger seat P that are disposed adjacent to each other in the vehicle width direction are offset with respect to each other in the vehicle front-rear direction in order to enable sufficient space to be secured to rotate the driver's seat D or the front passenger seat P. This enables interference between the moving front seats 16A and the rear seats 16B, including the occupants sitting on the rear seats 16B, to be suppressed.

As described above, the present exemplary embodiment is capable of preventing or suppressing interference between the driver and a front seat passenger sitting on the respective front seats 16A. Note that the recliner devices 50 may be actuated as the front seats 16A rotate in order to stand the seatbacks 20 upright.

Moreover, although explanation has been given regarding examples in which the process performed by the vehicle seat control device 10 is implemented by software-based process performed by executing a program, there is no limitation thereto. For example, hardware-based process may be implemented instead. Alternatively, process combining both software and hardware may be implemented. In a case in which software-based process is employed, the program may be circulated in a format stored on various non-transitory storage media such as a digital versatile disc (DVD), and executed by a processor such as the CPU 24.

The present disclosure is not limited to the exemplary embodiments described above, and obviously various other modifications may be implemented within a range not departing from the scope of the claims.

## Claims

1. A vehicle seat control device (10) comprising:
a first seat arrangement information acquisition section (60) configured to acquire position information of a first seat arrangement (P) representing current seat positions of a plurality of seats (16) that are configured to be capable of moving in a cabin interior (14);
a second seat arrangement information acquisition section (62) configured to acquire position information of a second seat arrangement (Q) representing post-movement seat positions of the plurality of seats (16);
a path identification section (64) configured to identify a movement path of a moving seat (16A, D, P) of the plurality of seats (16) when moving from the first seat arrangement (P) acquired by the first seat arrangement information acquisition section (60) to the second seat arrangement (Q) acquired by the second seat arrangement information acquisition section (62);
an occupant detection section (66) configured to detect occupants sitting on the plurality of seats (16); and
a seat operation section (72) configured to operate the moving seat (16A, D, P) so as to move the moving seat (16A, D, P) along the movement path identified by the path identification section (64),
a warning generation section (70) configured to issue a warning,
wherein, in a case in which an occupant sitting on another seat (16B, P, D) disposed peripherally to the movement path of the moving seat (16A, D, P) has been detected by the occupant detection section (66),
the seat operation section (72) is controlled so as to execute any one action of the group consisting of reducing a movement speed of the moving seat (16A, D, P), canceling movement of the moving seat (16A, D, P), and shortening a movement distance of the moving seat (16A, D, P), or
the seat operation section (72) is controlled so as to move the other seat (16B, P, D) in a direction away from the moving seat (16A, D, P) before moving the moving seat (16A, D, P) along the movement path to the second seat arrangement (Q),
**characterized in that** the warning generation section (70) is controlled so as to issue the warning coordinated with movement of the moving seat (16A, D, P) in a case in which an occupant sitting on another seat (16B, P, D) disposed peripherally to the movement path of the moving seat (16A, D, P) has been detected by the occupant detection section (66).

2. The vehicle seat control device (10) of claim 1, wherein, in a case in which an occupant sitting on another seat (16B, P, D) disposed peripherally to the movement path of the moving seat (16A, D, P) has been detected by the occupant detection section (66), the seat operation section (72) is controlled so as to reduce a movement speed of the moving seat (16A, D, P) in comparison to a case in which there is no detection of any occupant sitting on the other seat (16B, P, D).

3. The vehicle seat control device (10) of claim 1, comprising a movement distance computation section (65) configured to compute a movement distance of the moving seat (16A, D, P),
wherein the seat operation section (72) is controlled so as to cancel movement of the moving seat (16A, D, P) in a case in which a distance between the moving seat (16A, D, P) at the first seat arrangement (P) and an occupant sitting on another seat (16B, P, D) is smaller than the movement distance of the moving seat (16A, D, P) when moving from the first seat arrangement (P) to the second seat arrangement (Q).

4. The vehicle seat control device (10) any one of claims 1 to 3, wherein, in a case in which an occupant sitting on another seat disposed peripherally to the movement path of the moving seat (16A, D, P) has been detected by the occupant detection section (66), the warning generation section (70) is controlled so as to issue the warning to the occupant sitting on the other seat (16B, P, D).

5. The vehicle seat control device (10) of any one of claim 1 to claim 4, wherein the seat operation section (72) is controlled so as to stop the moving seat (16A, D, P) in a case in which the moving seat (16A, D, P) has interfered with another occupant or another seat (16B, P, D).

6. A vehicle seat control method being performed by a processor (24), the vehicle seat control method comprising:
acquiring (S100) position information of a first seat arrangement (P) representing current seat positions of a plurality of seats (16) that are configured to be capable of moving in a cabin interior (14);
acquiring (S102) position information of a second seat arrangement (Q) representing post-movement seat positions of the plurality of seats (16);
identifying (S108, S114, S116) a movement path of a moving seat (16A, D, P) of the plurality of seats (16) when moving from the acquired first seat arrangement (P) to the acquired second seat arrangement (Q);
detecting (S106, S112, S118) occupants sitting on the plurality of seats (16); and
operating the moving seat (16A, D, P) so as to move the moving seat (16A, D, P) along the identified movement path,
wherein, in a case in which an occupant sitting on another seat disposed peripherally to the movement path of the moving seat has been detected, the vehicle seat control method further comprises
controlling so as to execute any one action of the group consisting of reducing (S124) a movement speed of the moving seat (16A, D, P), canceling (S132) movement of the moving seat (16A, D, P), and shortening (5126) a movement distance of the moving seat (16A, D, P), or
controlling so as to move (S210) the other seat (16A, D, P) in a direction away from the moving seat (16A, D, P) before moving the moving seat (16A, D, P) along the movement path to the second seat arrangement (Q),
**characterized by** issuing a warning (S128) coordinated with movement of the moving seat (16A, D, P) in a case in which an occupant sitting on another seat (16B, P, D) disposed peripherally to the movement path of the moving seat (16A, D, P) has been detected.

7. The vehicle seat control method of claim 6, comprising, in a case in which an occupant sitting on another seat (16B, P, D) disposed peripherally to the movement path of the moving seat (16A, D, P) has been detected, reducing (S124) a movement speed of the moving seat (16A, D, P) in comparison to a case in which there is no detection of any occupant sitting on the other seat (16B, P, D).

8. The vehicle seat control method of claim 6, comprising,
computing a movement distance of the moving seat (16A, D, P); and
cancelling (S132) movement of the moving seat (16A, D, P) in a case in which a distance (L2) between the moving seat (16A, D, P) at the first seat arrangement (P) and an occupant sitting on another seat (16B, P, D) is smaller than the movement distance (L1) of the moving seat (16A, D, P) when moving from the first seat arrangement (P) to the second seat arrangement (Q).

9. A program for causing a vehicle seat control process to be executed, the process comprising,
acquiring (S100) position information of a first seat arrangement (P) representing current seat positions of a plurality of seats (16) that are configured to be capable of moving in a cabin interior (14);
acquiring (S102) position information of a second seat arrangement (Q) representing post-movement seat positions of the plurality of seats (16);
identifying (S108, S114, S120) a movement path of a moving seat (16A, D, P) of the plurality of seats (16) when moving from the acquired first seat arrangement (P) to the acquired second seat arrangement (Q);
detecting (S106, S112, S118) occupants sitting on the plurality of seats (16); and operating the moving seat (16A, D, P) so as to move the moving seat (16A, D, P) along the identified movement path,
wherein, in a case in which an occupant sitting on another seat (16B, P, D) disposed peripherally to the movement path of the moving seat (16A, D, P) has been detected, the process further comprises
controlling so as to execute any one action of the group consisting of reducing (S124) a movement speed of the moving seat (16A, D, P), canceling (S132) movement of the moving seat (16A, D, P), and shortening (5126) a movement distance of the moving seat (16A, D, P), or
controlling so as to move (S210) the other seat (16B, P, D) in a direction away from the moving seat (16A, D, P) before moving the moving seat (16A, D, P) along the movement path to the second seat arrangement (Q),
**characterized in that** the process comprises issuing a warning (S128) coordinated with movement of the moving seat (16A, D, P) in a case in which an occupant sitting on another seat (16B, P, D) disposed peripherally to the movement path of the moving seat (16A, D, P) has been detected.

10. The program of claim 9, wherein the process comprises, in a case in which an occupant sitting on another seat (16B, P, D) disposed peripherally to the movement path of the moving seat (16A, D, P) has been detected, reducing (S124) a movement speed of the moving seat (16A, D, P) in comparison to a case in which there is no detection of any occupant sitting on the other seat (16B, P, D).

11. The program of claim 9, wherein the process comprises:
computing a movement distance of the moving seat (16A, D, P); and
cancelling (S132) movement of the moving seat (16A, D, P) in a case in which a distance (L2) between the moving seat (16A, D, P) at the first seat arrangement (P) and an occupant sitting on another seat (16B, P, D) is smaller than the movement distance of the moving seat (16A, D, P) when moving from the first seat arrangement (P) to the second seat arrangement (Q).

## Patentansprüche

1. Fahrzeugsitz-Steuervorrichtung (10), umfassend:
eine erste Sitzanordnungs-Informationserfassungs-Sektion (60), die dazu ausgestaltet, Positionsinformationen einer ersten Sitzanordnung (P) zu erfassen, welche die aktuellen Sitzpositionen mehrerer Sitze (16) darstellt, die dazu ausgestaltet sind, in der Lage zu sein, sich innerhalb eines Kabineninnenraums (14) zu bewegen,
eine zweite Sitzanordnungs-Informationserfassungs-Sektion (62), die dazu ausgestaltet ist, Positionsinformationen einer zweiten Sitzanordnung (Q) zu erfassen, welche die Sitzpositionen der mehreren Sitze (16) nach einer Bewegung darstellt,
eine Pfad-Identifizierungs-Sektion (64), die dazu ausgestaltet ist, einen Bewegungspfad eines sich bewegenden Sitzes (16A, D, P) der mehreren Sitze (16) zu identifizieren, wenn dieser sich von der ersten Sitzanordnung (P), die von der ersten Sitzanordnungs-Informationserfassungs-Sektion (60) erfasst wurde, in die zweite Sitzanordnung (Q) bewegt, die von der zweiten Sitzanordnungs-Informationserfassungs-Sektion (62) erfasst wurde,
eine Insassen-Erkennungs-Sektion (66), die dazu ausgestaltet ist, Insassen zu erkennen, die auf den mehreren Sitzen (16) sitzen, und
eine Sitz-Betätigungs-Sektion (72), die dazu ausgestaltet ist, den sich bewegenden Sitz (16A, D, P) so zu betätigen, dass der sich bewegende Sitz (16A, D, P) sich entlang des Bewegungspfads bewegt, der von der Pfad-Identifizierungs-Sektion (64) identifiziert wird,
eine Warnungs-Erzeugungs-Sektion (70), die dazu ausgestaltet ist, eine Warnung auszugeben,
wobei in einem Fall, in dem ein Insasse, der auf einem anderen Sitz (16B, P, D) sitzt, der in der Umgebung des Bewegungspfads des sich bewegenden Sitzes (16A, D, P) angeordnet ist, von der Insassen-Erkennungs-Sektion (66) erkannt worden ist,
die Sitz-Betätigungs-Sektion (72) so gesteuert wird, dass sie einen Vorgang aus der Gruppe bestehend aus Verringern einer Bewegungsgeschwindigkeit des sich bewegenden Sitzes (16A, D, P), Abbrechen der Bewegung des sich bewegenden Sitzes (16A, D, P) und Verkürzen eines Bewegungsabstands des sich bewegenden Sitzes (16A, D, P) ausführt, oder
die Sitz-Betätigungs-Sektion (72) so gesteuert wird, dass sie den anderen Sitz (16B, P, D) in einer Richtung von dem sich bewegenden Sitz (16A, D, P) weg bewegt, bevor sie den sich bewegenden Sitz (16A, D, P) entlang des Bewegungspfads in die zweite Sitzanordnung (Q) bewegt,
**dadurch gekennzeichnet, dass** die Warnungs-Erzeugungs-Sektion (70) so gesteuert wird, dass sie in einem Fall, in dem von der Insassen-Erkennungs-Sektion (66) ein Insasse erkannt worden ist, der auf einem anderen Sitz (16B, P, D) sitzt, der in der Umgebung des Bewegungspfads des sich bewegenden Sitzes (16A, D, P) angeordnet ist, die Warnung mit der Bewegung des sich bewegenden Sitzes (16A, D, P) koordiniert ausgibt.

2. Fahrzeugsitz-Steuervorrichtung (10) nach Anspruch 1,
wobei in einem Fall, in dem ein Insasse, der auf einem anderen Sitz (16B, P, D) sitzt, der in der Umgebung des Bewegungspfads des sich bewegenden Sitzes (16A, D, P) angeordnet ist, von der Insassen-Erkennungs-Sektion (66) erkannt worden ist, die Sitz-Betätigungs-Sektion (72) so gesteuert wird, dass sie eine Bewegungsgeschwindigkeit des sich bewegenden Sitzes (16A, D, P) im Vergleich zu einem Fall, in welchem keine Erkennung eines Insassen erfolgt, der auf dem anderen Sitz (16B, P, D) sitzt, verringert.

3. Fahrzeugsitz-Steuervorrichtung (10) nach Anspruch 1, umfassend eine Bewegungsabstand-Berechnungs-Sektion (65), die dazu ausgestaltet ist, einen Bewegungsabstand des sich bewegenden Sitzes (16A, D, P) zu berechnen,
wobei die Sitz-Betätigungs-Sektion (72) so gesteuert wird, dass sie die Bewegung des sich bewegenden Sitzes (16A, D, P) in einem Fall abbricht, in welchem ein Abstand zwischen dem sich bewegenden Sitz (16A, D, P) in der ersten Sitzanordnung (P) und einem Insassen, der auf einem anderen Sitz (16B, P, D) sitzt, kleiner ist als der Bewegungsabstand des sich bewegenden Sitzes (16A, D, P), wenn er sich von der ersten Sitzanordnung (P) in die zweite Sitzanordnung (Q) bewegt.

4. Fahrzeugsitz-Steuervorrichtung (10) nach einem der Ansprüche 1 bis 3, wobei in einem Fall, in dem von der Insassen-Erkennungs-Sektion (66) ein Insasse erkannt worden ist, der auf einem anderen Sitz sitzt, der in der Umgebung des Bewegungspfads des sich bewegenden Sitzes (16A, D, P) angeordnet ist, die Warnungs-Erzeugungs-Sektion (70) so gesteuert wird, dass sie die Warnung an den Insassen ausgibt, der auf dem anderen Sitz (16B, P, D) sitzt.

5. Fahrzeugsitz-Steuervorrichtung (10) nach einem von Anspruch 1 bis Anspruch 4, wobei die Sitz-Betätigungs-Sektion (72) so gesteuert wird, dass sie den sich bewegenden Sitz (16A, D, P) in einem Fall stoppt, in dem der sich bewegende Sitz (16A, D, P) mit einem anderen Insassen oder einem anderen Sitz (16B, P, D) interferiert hat.

6. Fahrzeugsitz-Steuerverfahren, das von einem Prozessor (24) ausgeführt wird, wobei das Fahrzeugsitz-Steuerverfahren umfasst:
Erfassen (S100) von Positionsinformationen einer ersten Sitzanordnung (P), welche die aktuellen Sitzpositionen mehrerer Sitze (16) darstellt, die dazu ausgestaltet sind, in der Lage zu sein, sich innerhalb eines Kabineninnenraums (14) zu bewegen,
Erfassen (S102) von Positionsinformationen einer zweiten Sitzanordnung (Q), welche die Sitzpositionen der mehreren Sitze (16) nach einer Bewegung darstellt,
Identifizieren (S108, S114, S116) eines Bewegungspfads eines sich bewegenden Sitzes (16A, D, P) der mehreren Sitze (16), wenn dieser sich von der erfassten ersten Sitzanordnung (P) in die erfasste zweite Sitzanordnung (Q) bewegt,
Erkennen (S106, S112, S118) von Insassen, die auf den mehreren Sitzen (16) sitzen, und
Betätigen des sich bewegenden Sitzes (16A, D, P), um den sich bewegenden Sitz (16A, D, P) entlang des identifizierten Bewegungspfads zu bewegen,
wobei in einem Fall, in dem ein Insasse erkannt worden ist, der auf einem anderen Sitz sitzt, der in der Umgebung des Bewegungspfads des sich bewegenden Sitzes angeordnet ist, das Fahrzeugsitz-Steuerverfahren ferner umfasst
Steuern auf solche Weise, dass ein Vorgang aus der Gruppe bestehend aus Verringern (S124) einer Bewegungsgeschwindigkeit des sich bewegenden Sitzes (16A, D, P), Abbrechen (S132) der Bewegung des sich bewegenden Sitzes (16A, D, P), und Verkürzen (S126) eines Bewegungsabstands des sich bewegenden Sitzes (16A, D, P) ausgeführt wird, oder
Steuern auf solche Weise, dass der andere Sitz (16A, P, D) in einer Richtung von dem sich bewegenden Sitz (16A, D, P) weg bewegt (S210) wird, bevor der sich bewegende Sitz (16A, D, P) entlang des Bewegungspfads in die zweite Sitzanordnung (Q) bewegt wird,
**dadurch gekennzeichnet, dass** in einem Fall, in dem ein Insasse erkannt worden ist, der auf einem anderen Sitz (16B, P, D) sitzt, der in der Umgebung des Bewegungspfads des sich bewegenden Sitzes (16A, D, P) angeordnet ist, eine Warnung mit der Bewegung des sich bewegenden Sitzes (16A, D, P) koordiniert ausgegeben (S128) wird.

7. Fahrzeugsitz-Steuerverfahren nach Anspruch 6, umfassend in einem Fall, in dem ein Insasse, der auf einem anderen Sitz (16B, P, D) sitzt, der in der Umgebung des Bewegungspfads des sich bewegenden Sitzes (16A, D, P) angeordnet ist, erkannt worden ist, das Verringern (S124) einer Bewegungsgeschwindigkeit des sich bewegenden Sitzes (16A, D, P) im Vergleich zu einem Fall, in welchem keine Erkennung eines Insassen erfolgt, der auf dem anderen Sitz (16B, P, D) sitzt.

8. Fahrzeugsitz-Steuerverfahren nach Anspruch 6, umfassend
Berechnen eines Bewegungsabstands des sich bewegenden Sitzes (16A, D, P), und
Abbrechen (S132) der Bewegung des sich bewegenden Sitzes (16A, D, P) in einem Fall, in welchem ein Abstand (L2) zwischen dem sich bewegenden Sitz (16A, D, P) in der ersten Sitzanordnung (P) und einem Insassen, der auf einem anderen Sitz (16B, P, D) sitzt, kleiner ist als der Bewegungsabstand (L1) des sich bewegenden Sitzes (16A, D, P), wenn er sich von der ersten Sitzanordnung (P) in die zweite Sitzanordnung (Q) bewegt.

9. Programm, um zu veranlassen, dass ein Fahrzeugsitz-Steuerverfahren ausgeführt wird, wobei das Verfahren umfasst:
Erfassen (S100) von Positionsinformationen einer ersten Sitzanordnung (P), welche die aktuellen Sitzpositionen mehrerer Sitze (16) darstellt, die dazu ausgestaltet sind, in der Lage zu sein, sich innerhalb eines Kabineninnenraums (14) zu bewegen,
Erfassen (S102) von Positionsinformationen einer zweiten Sitzanordnung (Q), welche die Sitzpositionen der mehreren Sitze (16) nach einer Bewegung darstellt,
Identifizieren (S108, S114, S120) eines Bewegungspfads eines sich bewegenden Sitzes (16A, D, P) der mehreren Sitze (16), wenn dieser sich von der erfassten ersten Sitzanordnung (P) in die erfasste zweite Sitzanordnung (Q) bewegt,
Erkennen (S106, S112, S118) von Insassen, die auf den mehreren Sitzen (16) sitzen, und
Betätigen des sich bewegenden Sitzes (16A, D, P), um den sich bewegenden Sitz (16A, D, P) entlang des identifizierten Bewegungspfads zu bewegen,
wobei in einem Fall, in dem ein Insasse erkannt worden ist, der auf einem anderen Sitz (16B, P, D) sitzt, der in der Umgebung des Bewegungspfads des sich bewegenden Sitzes (16A, D, P) angeordnet ist, das Verfahren ferner umfasst
Steuern auf solche Weise, dass ein Vorgang aus der Gruppe bestehend aus Verringern (S124) einer Bewegungsgeschwindigkeit des sich bewegenden Sitzes (16A, D, P), Abbrechen (S132) der Bewegung des sich bewegenden Sitzes (16A, D, P) und Verkürzen (S126) eines Bewegungsabstands des sich bewegenden Sitzes (16A, D, P) ausgeführt wird, oder
Steuern auf solche Weise, dass der andere Sitz (16B, P, D) in einer Richtung von dem sich bewegenden Sitz (16A, D, P) weg bewegt (S210) wird, bevor der sich bewegende Sitz (16A, D, P) entlang des Bewegungspfads in die zweite Sitzanordnung (Q) bewegt wird,
**dadurch gekennzeichnet, dass** das Verfahren in einem Fall, in dem ein Insasse erkannt worden ist, der auf einem anderen Sitz (16B, P, D) sitzt, der in der Umgebung des Bewegungspfads des sich bewegenden Sitzes (16A, D, P) angeordnet ist, das Ausgeben (S128) einer Warnung koordiniert mit der Bewegung des sich bewegenden Sitzes (16A, D, P) umfasst.

10. Programm nach Anspruch 9, wobei das Verfahren in einem Fall, in dem ein Insasse erkannt worden ist, der auf einem anderen Sitz (16B, P, D) sitzt, der in der Umgebung des Bewegungspfads des sich bewegenden Sitzes (16A, D, P) angeordnet ist, das Verringern (S124) einer Bewegungsgeschwindigkeit des sich bewegenden Sitzes (16A, D, P) im Vergleich zu einem Fall umfasst, in welchem keine Erkennung eines Insassen erfolgt, der auf dem anderen Sitz (16B, P, D) sitzt.

11. Programm nach Anspruch 9, wobei das Verfahren umfasst:
Berechnen eines Bewegungsabstands des sich bewegenden Sitzes (16A, D, P), und
Abbrechen (S132) der Bewegung des sich bewegenden Sitzes (16A, D, P) in einem Fall, in welchem ein Abstand (L2) zwischen dem sich bewegenden Sitz (16A, D, P) in der ersten Sitzanordnung (P) und einem Insassen, der auf einem anderen Sitz (16B, P, D) sitzt, kleiner ist als der Bewegungsabstand des sich bewegenden Sitzes (16A, D, P), wenn er sich von der ersten Sitzanordnung (P) in die zweite Sitzanordnung (Q) bewegt.

## Revendications

1. Dispositif de commande de siège de véhicule (10) comprenant :
une première section d'acquisition d'information de disposition de siège (60) configurée pour acquérir de l'information de position d'une première disposition de siège (P) représentant des positions de siège courantes d'une pluralité de sièges (16) qui sont configurés pour être capables de se déplacer dans un intérieur d'habitacle (14) ;
une deuxième section d'acquisition d'information de disposition de siège (62) configurée pour acquérir de l'information de position d'une deuxième disposition de siège (Q) représentant des positions de siège post-déplacement de la pluralité de sièges (16) ;
une section d'identification de trajectoire (64) configurée pour identifier une trajectoire de déplacement d'un siège mobile (16A, D, P) de la pluralité de sièges (16) lors d'un déplacement depuis la première disposition de siège (P) acquise par la première section d'acquisition d'information de disposition de siège (60) jusqu'à la deuxième disposition de siège (Q) acquise par la deuxième section d'acquisition d'information de disposition de siège (62) ;
une section de détection d'occupant (66) configurée pour détecter des occupants assis sur la pluralité de sièges (16) ; et
une section d'actionnement de siège (72) configurée pour actionner le siège mobile (16A, D, P) de façon à déplacer le siège mobile (16A, D, P) le long de la trajectoire de déplacement identifiée par la section d'identification de trajectoire (64),
une section de génération d'avertissement (70) configurée pour délivrer un avertissement,
dans lequel, dans un cas dans lequel un occupant assis sur un autre siège (16B, P, D) disposé en périphérie de la trajectoire de déplacement du siège mobile (16A, D, P) a été détecté par la section de détection d'occupant (66),
la section d'actionnement de siège (72) est commandée de façon à exécuter n'importe quelle action du groupe se composant de la réduction d'une vitesse de déplacement du siège mobile (16A, D, P), de l'annulation du déplacement du siège mobile (16A, D, P), et du raccourcissement d'une distance de déplacement du siège mobile (16A, D, P), ou bien
la section d'actionnement de siège (72) est commandée de façon à déplacer l'autre siège (16B, P, D) dans une direction à l'écart du siège mobile (16A, D, P) avant de déplacer le siège mobile (16A, D, P) le long de la trajectoire de déplacement jusqu'à la deuxième disposition de siège (Q),
**caractérisé en ce que** la section de génération d'avertissement (70) est commandée de façon à délivrer l'avertissement coordonné avec le déplacement du siège mobile (16A, D, P) dans un cas dans lequel un occupant assis sur un autre siège (16B, P, D) disposé en périphérie de la trajectoire de déplacement du siège mobile (16A, D, P) a été détecté par la section de détection d'occupant (66).

2. Dispositif de commande de siège de véhicule (10) selon la revendication 1, dans lequel, dans un cas dans lequel un occupant assis sur un autre siège (16B, P, D) disposé en périphérie de la trajectoire de déplacement du siège mobile (16A, D, P) a été détecté par la section de détection d'occupant (66), la section d'actionnement de siège (72) est commandée de façon à réduire une vitesse de déplacement du siège mobile (16A, D, P) par rapport à un cas dans lequel il n'y a pas de détection d'un quelconque occupant assis sur l'autre siège (16B, P, D).

3. Dispositif de commande de siège de véhicule (10) selon la revendication 1, comprenant une section de calcul de distance de déplacement (65) configurée pour calculer une distance de déplacement du siège mobile (16A, D, P),
la section d'actionnement de siège (72) étant commandée de façon à annuler un déplacement du siège mobile (16A, D, P) dans un cas dans lequel une distance entre le siège mobile (16A, D, P) dans la première disposition de siège (P) et un occupant assis sur un autre siège (16B, P, D) est plus petite que la distance de déplacement du siège mobile (16A, D, P) lors du déplacement depuis la première disposition de siège (P) jusqu'à la deuxième disposition de siège (Q).

4. Dispositif de commande de siège de véhicule (10) selon l'une quelconque des revendications 1 à 3, dans lequel, dans un cas dans lequel un occupant assis sur un autre siège disposé en périphérie de la trajectoire de déplacement du siège mobile (16A, D, P) a été détecté par la section de détection d'occupant (66), la section de génération d'avertissement (70) est commandée de façon à délivrer l'avertissement à l'occupant assis sur l'autre siège (16B, P, D) .

5. Dispositif de commande de siège de véhicule (10) selon l'une quelconque des revendications 1 à 4, dans lequel la section d'actionnement de siège (72) est commandée de façon à arrêter le siège mobile (16A, D, P) dans un cas dans lequel le siège mobile (16A, D, P) a interféré avec un autre occupant ou un autre siège (16B, P, D).

6. Procédé de commande de siège de véhicule mis en œuvre par un processeur (24), le procédé de commande de siège de véhicule comprenant le fait de :
acquérir (S100) de l'information de position d'une première disposition de siège (P) représentant des positions de siège courantes d'une pluralité de sièges (16) qui sont configurés pour être capables de se déplacer dans un intérieur d'habitacle (14) ;
acquérir (S102) de l'information de position d'une deuxième disposition de siège (Q) représentant des positions de siège post-déplacement de la pluralité de sièges (16) ;
identifier (S108, S114, S116) une trajectoire de déplacement d'un siège mobile (16A, D, P) de la pluralité de sièges (16) lors d'un déplacement depuis la première disposition de siège acquise (P) jusqu'à la deuxième disposition de siège acquise (Q) ;
détecter (S106, S112, S118) des occupants assis sur la pluralité de sièges (16) ; et
actionner le siège mobile (16A, D, P) de façon à déplacer le siège mobile (16A, D, P) le long de la trajectoire de déplacement identifiée,
selon lequel, dans un cas dans lequel un occupant assis sur un autre siège disposé en périphérie de la trajectoire de déplacement du siège mobile a été détecté, le procédé de commande de siège de véhicule comprend en outre le fait de
commander de façon à exécuter une action quelconque du groupe se composant de la réduction (S124) d'une vitesse de déplacement du siège mobile (16A, D, P), de l'annulation (S132) d'un déplacement du siège mobile (16A, D, P), et du raccourcissement (S126) d'une distance de déplacement du siège mobile (16A, D, P), ou bien
commander de façon à déplacer (S210) l'autre siège (16A, D, P) dans une direction à l'écart du siège mobile (16A, D, P) avant de déplacer le siège mobile (16A, D, P) le long de la trajectoire de déplacement jusqu'à la deuxième disposition de siège (Q),
**caractérisé par** le fait de délivrer un avertissement (S128) coordonné avec un déplacement du siège mobile (16A, D, P) dans un cas dans lequel un occupant assis sur un autre siège (16B, P, D) disposé en périphérie de la trajectoire de déplacement du siège mobile (16A, D, P) a été détecté.

7. Procédé de commande de siège de véhicule selon la revendication 6, comprenant, dans un cas dans lequel un occupant assis sur un autre siège (16B, P, D) disposé en périphérie de la trajectoire de déplacement du siège mobile (16A, D, P) a été détecté, la réduction (S124) d'une vitesse de déplacement du siège mobile (16A, D, P) par rapport à un cas dans lequel il n'y a pas de détection d'un quelconque occupant assis sur l'autre siège (16B, P, D).

8. Procédé de commande de siège de véhicule selon la revendication 6, comprenant le fait de
calculer une distance de déplacement du siège mobile (16A, D, P) ; et
annuler (S132) un déplacement du siège mobile (16A, D, P) dans un cas dans lequel une distance (L2) entre le siège mobile (16A, D, P) dans la première disposition de siège (P) et un occupant assis sur un autre siège (16B, P, D) est plus petite que la distance de déplacement (L1) du siège mobile (16A, D, P) lors d'un déplacement depuis la première disposition de siège (P) jusqu'à la deuxième disposition de siège (Q).

9. Programme pour amener un processus de commande de siège de véhicule à être exécuté, le processus comprenant le fait de
acquérir (S100) de l'information de position d'une première disposition de siège (P) représentant des positions de siège courantes d'une pluralité de sièges (16) qui sont configurés pour être capables de se déplacer dans un intérieur d'habitacle (14) ;
acquérir (S102) de l'information de position d'une deuxième disposition de siège (Q) représentant des positions de siège post-déplacement de la pluralité de sièges (16) ;
identifier (S108, S114, S120) une trajectoire de déplacement d'un siège mobile (16A, D, P) de la pluralité de sièges (16) lors d'un déplacement depuis la première disposition de siège acquise (P) jusqu'à la deuxième disposition de siège acquise (Q) ;
détecter (S106, S112, S118) des occupants assis sur la pluralité de sièges (16) ; et
actionner le siège mobile (16A, D, P) de façon à déplacer le siège mobile (16A, D, P) le long de la trajectoire de déplacement identifiée,
selon lequel, dans un cas dans lequel un occupant assis sur un autre siège (16B, P, D) disposé en périphérie de la trajectoire de déplacement du siège mobile (16A, D, P) a été détecté, le processus comprend en outre le fait de
commander de façon à exécuter une action quelconque du groupe se composant de la réduction (S124) d'une vitesse de déplacement du siège mobile (16A, D, P), de l'annulation (S132) d'un déplacement du siège mobile (16A, D, P), et du raccourcissement (S126) d'une distance de déplacement du siège mobile (16A, D, P), ou bien
commander de façon à déplacer (S210) l'autre siège (16B, P, D) dans une direction à l'écart du siège mobile (16A, D, P) avant de déplacer le siège mobile (16A, D, P) le long de la trajectoire de déplacement jusqu'à la deuxième disposition de siège (Q),
**caractérisé en ce que** le processus comprend le fait de délivrer un avertissement (S128) coordonné avec un déplacement du siège mobile (16A, D, P) dans un cas dans lequel un occupant assis sur un autre siège (16B, P, D) disposé en périphérie de la trajectoire de déplacement du siège mobile (16A, D, P) a été détecté.

10. Programme selon la revendication 9, dans lequel le processus comprend, dans un cas dans lequel un occupant assis sur un autre siège (16B, P, D) disposé en périphérie de la trajectoire de déplacement du siège mobile (16A, D, P) a été détecté, la réduction (S124) d'une vitesse de déplacement du siège mobile (16A, D, P) par rapport à un cas dans lequel il n'y a pas de détection d'un quelconque occupant assis sur l'autre siège (16B, P, D).

11. Programme selon la revendication 9, dans lequel le processus comprend le fait de :
calculer une distance de déplacement du siège mobile (16A, D, P) ; et
annuler (S132) un déplacement du siège mobile (16A, D, P) dans un cas dans lequel une distance (L2) entre le siège mobile (16A, D, P) dans la première disposition de siège (P) et un occupant assis sur un autre siège (16B, P, D) est plus petite que la distance de déplacement du siège mobile (16A, D, P) lors d'un déplacement depuis la première disposition de siège (P) jusqu'à la deuxième disposition de siège (Q).
